Europäisches Patentamt

European Patent Office

Office européen des brevets

(11) Publication number: **0 609 622 A1**

## EUROPEAN PATENT APPLICATION

(21) Application number: **93310050.5**

(22) Date of filing: **14.12.93**

(51) Int. Cl.⁵: **G06F 15/62**

(30) Priority: **31.12.92 US 999035**

(43) Date of publication of application:
**10.08.94 Bulletin 94/32**

(84) Designated Contracting States:
**DE FR GB**

(71) Applicant: **XEROX CORPORATION**
**Xerox Square**
**Rochester New York 14644 (US)**

(72) Inventor: **Hammond, Ralph G.**
**1609 Third Street**
**Manhatten Beach, California (US)**
Inventor: **Truong, Thanh D.**
**19000 E. Summit Ridge Drive**
**Walnut, California 91789 (US)**

(74) Representative: **Hill, Cecilia Ann et al**
**Rank Xerox Patent Department,**
**Albion House,**
**55-59 New Oxford Street**
**London WC1A 1BS (GB)**

(54) Cell band rotation.

(57) A method of rotating an image by any multiple of ninety degrees by conceptually dividing it into square blocks (C0), and further dividing up each block into a number of sub-blocks (CO-1 etc), such as four or sixteen. Each block is assigned an area that varies with the block's scan sequence in the rotated raster, as does each sub-block's position within the block's area in a memory. Each scanline is read out in source scan order, distributed into the memory by block and sub-block and is padded to a length that is a multiple of the block width. Finally, each block is read out of the memory in ordered sub-blocks and into a hardware rotator which then outputs the sub-block with its internal bits in their rotated positions. The overall result is a pipeline which rotates blocks first, and bits second, the result being a higher throughput speed.

*FIG. 2*

EP 0 609 622 A1

EP 0 609 622 A1

This invention is in the field of image data handling, and more specifically is a method of rotating an image by any whole number multiple of ninety degrees.

It is frequently necessary to rotate an image by 90, 180 or 270 degrees, or to form the mirror image of these. The obvious way to do this is to write an image into a memory in one direction and read it out in the orthogonal direction. However, this is a time consuming process when done in software and if done in hardware is either a slow process or requires expensive special circuitry.

A method in accordance with this invention first divides an original image into blocks and sub-blocks. The sub-blocks are then transferred to a second memory in their rotated location. From here, the individual scan lines are read into and then out from a rotator to rotate the bits within each block. The result is a pipeline which has more steps than previous systems, but each step is accomplished faster than any one step in the previous methods of rotation, thus improving throughput.

By way of example only, a method in accordance with the invention will be described with reference to the accompanying drawings, in which:

Figure 1 illustrates Cell Band Page Format;

Figure 2 illustrates the Cell Band Order Naming Convention (scale expanded for legibility);

Figure 3 shows eight orientations that are equivalent through rotation reflection and rotation;

Figure 4 is a Cell Band Rotator Block Diagram;

Figure 5 (A and B) illustrates the results of Steps A - D of a rotation operation as if displayed on the page;

Figure 6 illustrates object dimension conventions;

Figure 7 is a conceptual block diagram illustrating VRAM Scatter-Write Address Generation;

Figure 8 (A and B) show the detailed rotator logic data path;

Figure 9 (A and B) illustrates normal and interleaved data transfer;

Figure 10 shows typical Write Logic for a RAM Configuration A;

Figure 11 shows typical Read Logic for the RAM C onfiguration A;

Figure 12 (A and B) shows a stored and read data pattern (4x4 example) for the RAM Configuration A;

Figures 13 and 14 show typical White Logic for a RAM Configuration B;

Figure 15 shows typical Read Logic for the RAM Configuration B;

Figure 16 (A and B) shows a stored and read data pattern (4x4 example) for the RAM Configuration B;

Figure 17 shows the scan ordered source data stream sequence into VRAM (two bytes wide);

Figure 18 (A and B) shows an object with blocks and quarter blocks reordered for 0 and 90 degree rotation;

Figure 19A shows the block sequence from rotator to the processor and into the page image for 0/90 degrees;

Figure 19B shows the block sequence from rotator to the processor and into the page image for 0/90 degrees;

Figure 19C shows the block sequence from rotator to the processor and into the page image for 0/90 degrees;

Figure 19D shows the block sequence from rotator to the processor and into the page image for 0/90 degrees;

Figure 20A illustrates rotation to the bit level of first two quarter-quarter-blocks within the first block for 0 degree and 90 degree rotation (expanded scale);

Figure 20B illustrates rotation to the bit level of the second two quarter-quarter-blocks within the first block for 0 degree and 90 degree rotation (expanded scale);

Figure 20C illustrates rotation to the bit level of the third two quarter-quarter-blocks within the first block for 0 degree and 90 degree rotation (expanded scale);

Figure 20D illustrates rotation to the bit level of the fourth two quarter-quarter-blocks within the first block for 0 degree and 90 degree rotation (expanded scale);

Figure 20E illustrates rotation to the bit level of the fifth two quarter-quarter-blocks within the first block for 0 degree and 90 degree rotation (expanded scale);

Figure 20F illustrates rotation to the bit level of the sixth two quarter-quarter-blocks within the first block for 0 degree and 90 degree rotation (expanded scale);

Figure 20G illustrates rotation to the bit level of the seventh two quarter-quarter-blocks within the first block for 0 degree and 90 degree rotation (expanded scale);

Figure 20H (1 and 2) illustrates rotation of the eighth two qqb's within the first block for 0 and 90 degree rotation;

Figure 21 shows a shape with shading in both colors, each bit of 2-bit pixels compressed in separate arrays;

2

Figure 22 (A and B) shows an object with blocks and quarter blocks reordered for 90 degree rotation;

Figure 23A shows the first block (partial) written to page image;

Figure 23B shows the first and second block (partial) written to page image;

Figure 23C shows the second and third block (partial) written to page image;

Figure 23D shows the third and fourth block (partial) written to page image;

Figure 23E shows the fourth block (remainder) written to page image;

Figure 23F shows the fifth block (partial) written to page image;

Figure 23Gi shows the fifth and sixth block (partial) written to page image;

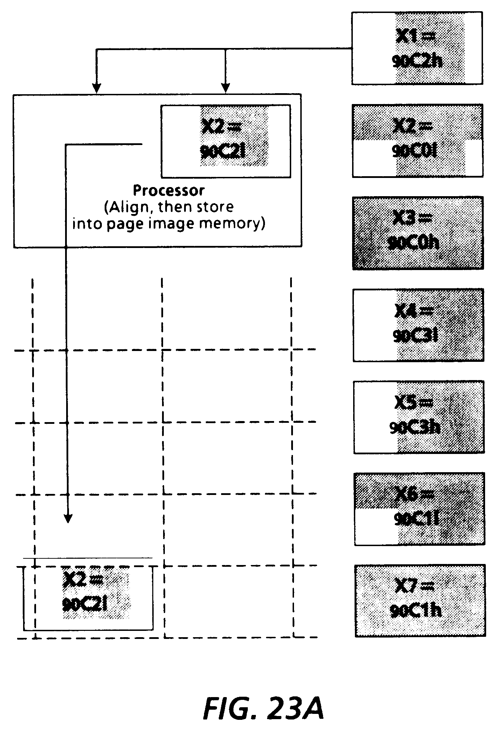

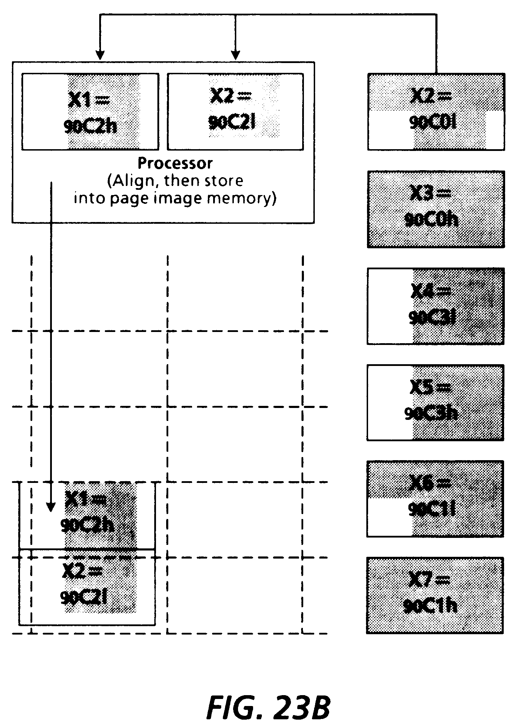

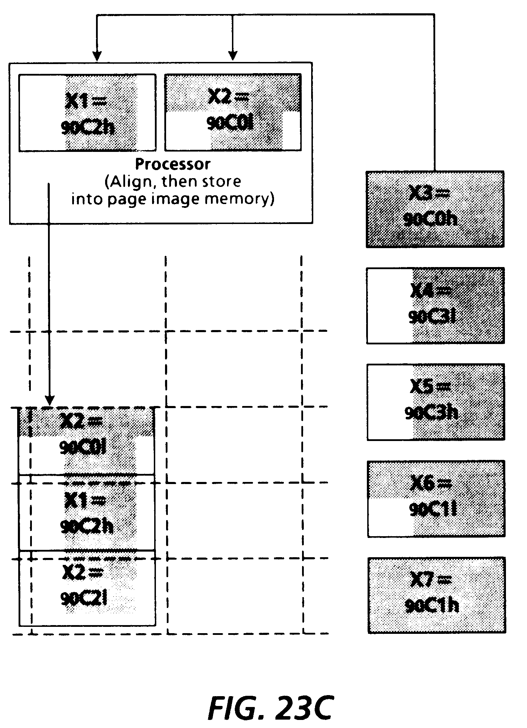

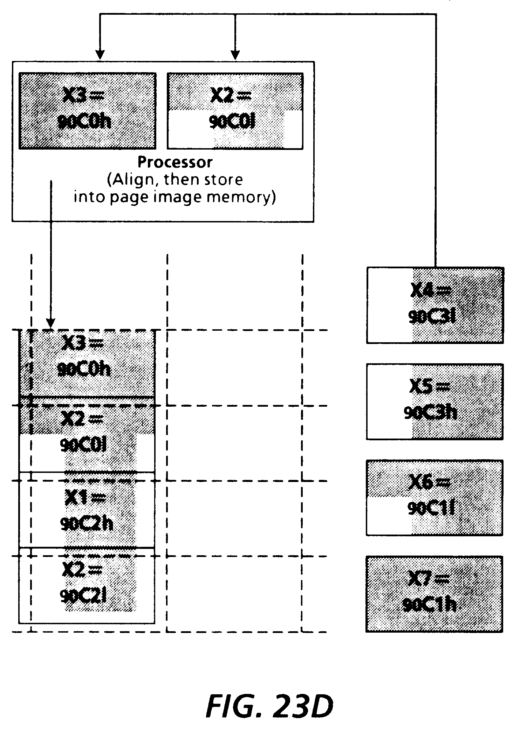

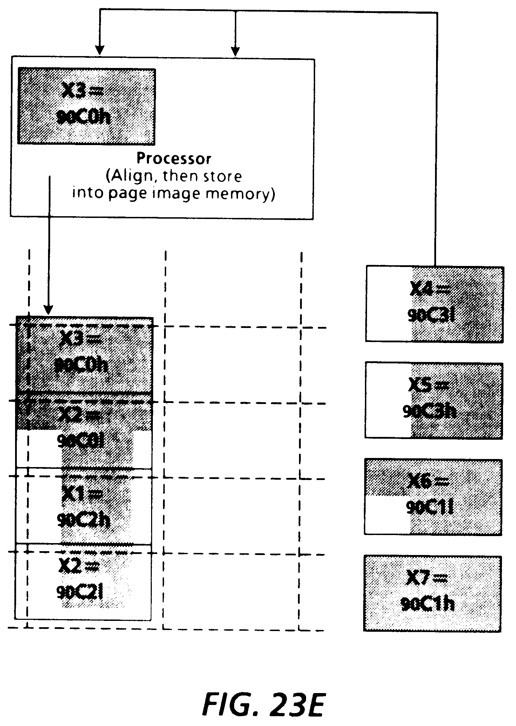

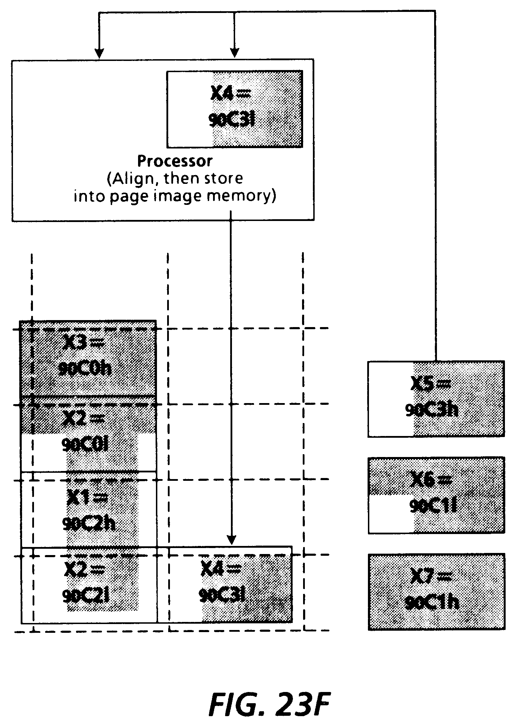

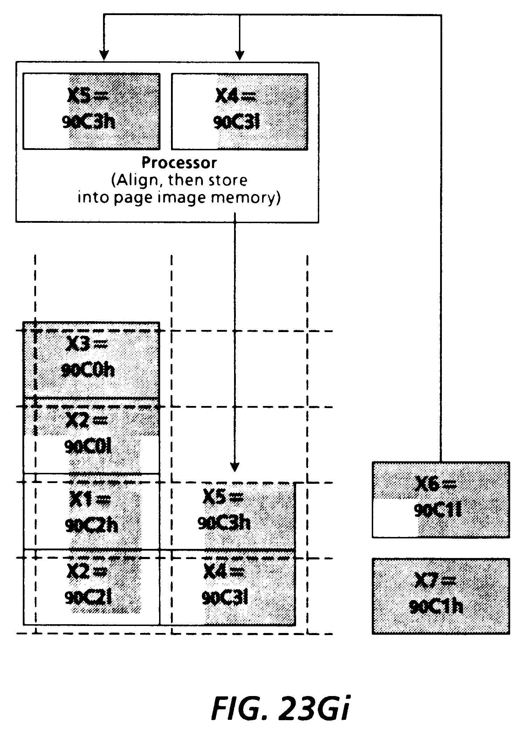

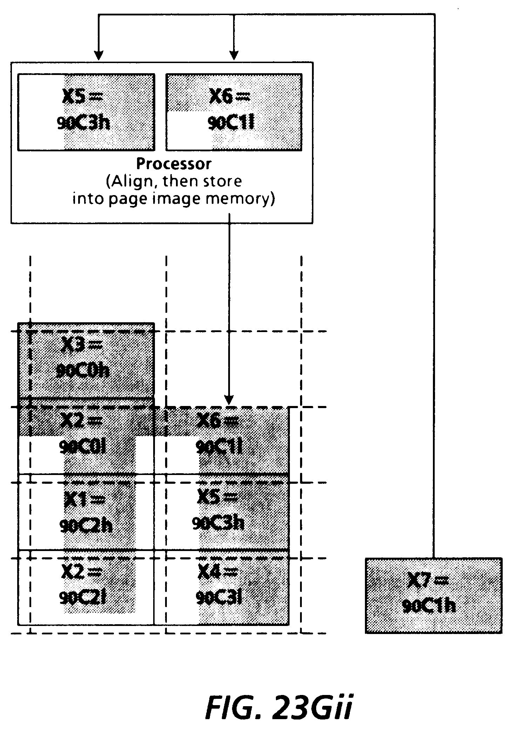

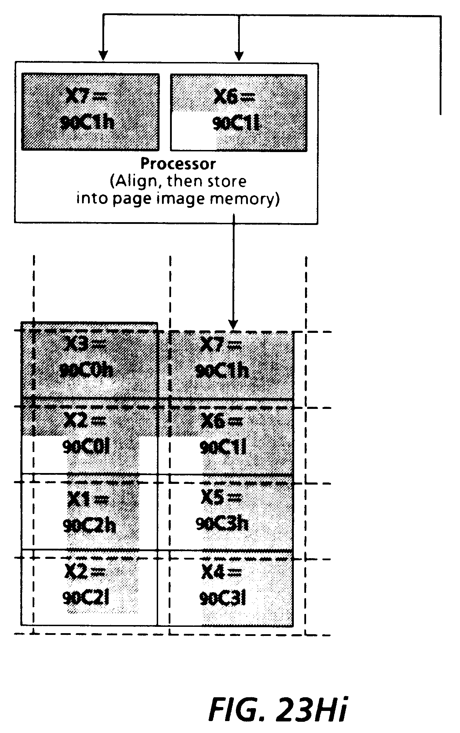

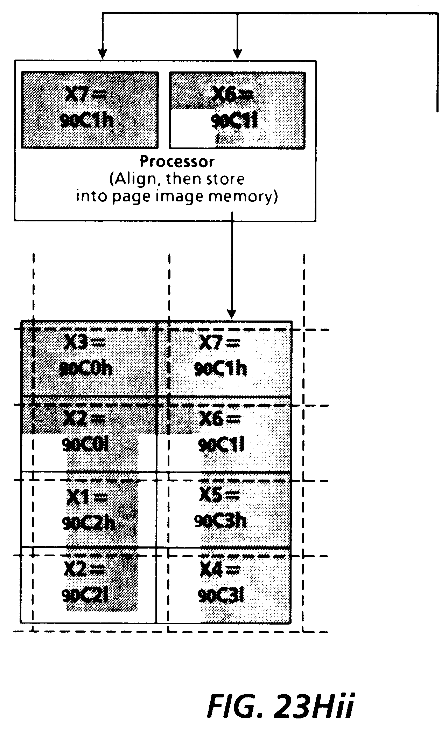

Figure 23Gii shows the sixth and seventh block (partial) written to page image;

Figure 23Hi shows the seventh and eighth block (partial) written to page image;

Figure 23Hii shows the eighth block (remainder) written to page image;

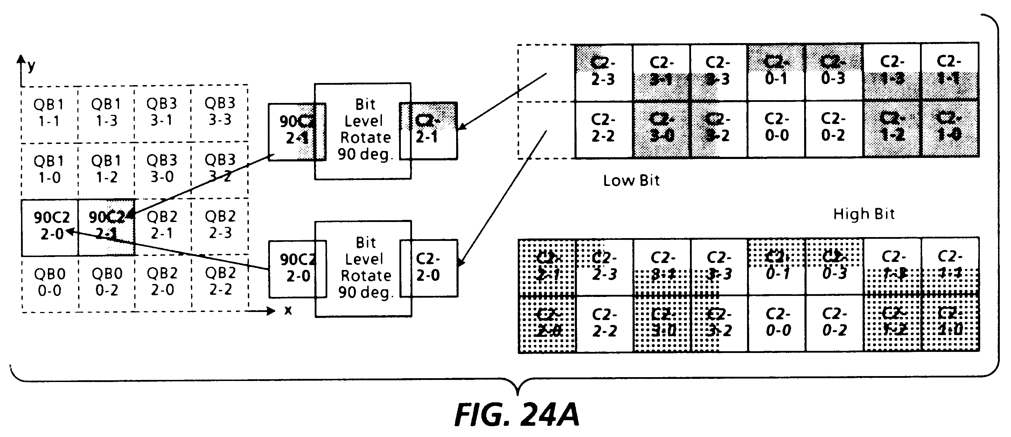

Figure 24A illustrates, for two colors, 90 degree rotation to bit level of a first pair of quarter-quarter-blocks;

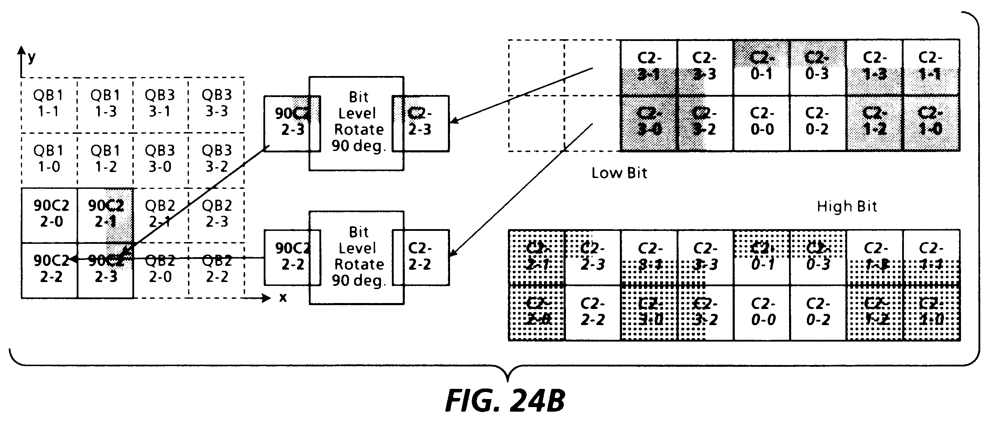

Figure 24B illustrates, for those two colors, 90 degree rotation to bit level of a second pair of quarter-quarter-blocks;

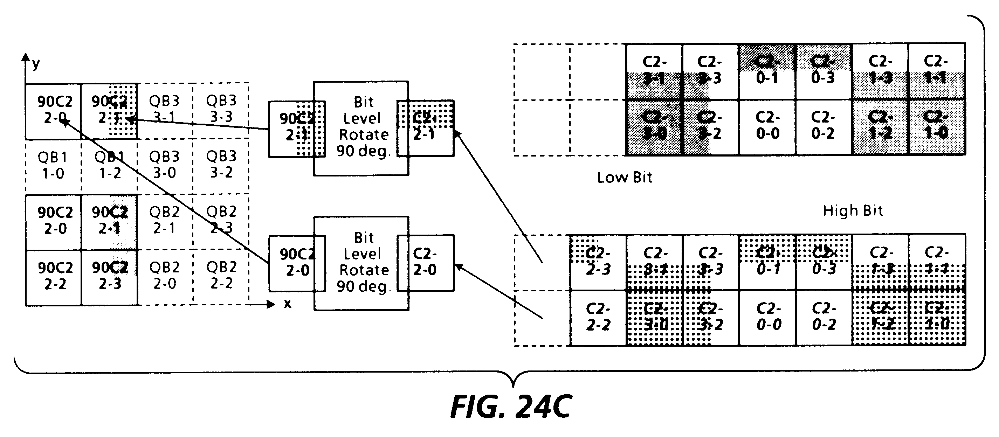

Figure 24C illustrates, for those two colors, 90 degree rotation to bit level of a third pair of quarter-quarter-blocks;

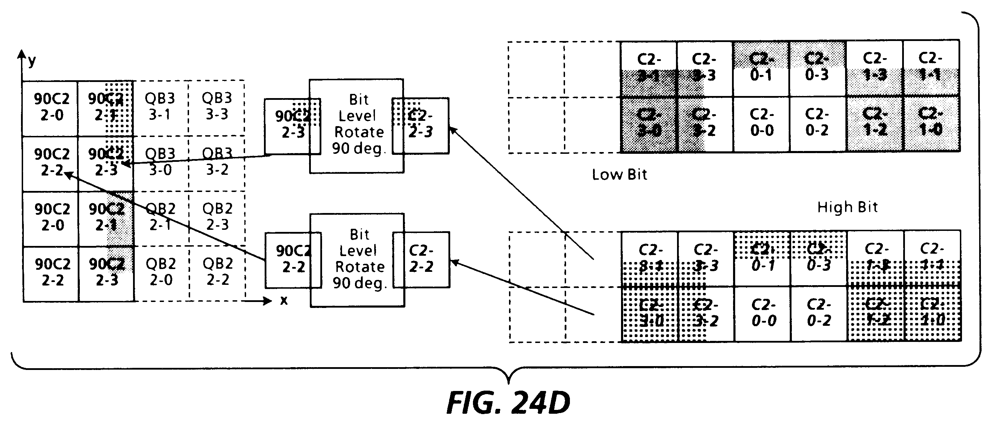

Figure 24D illustrates, for those two colors, 90 degree rotation to bit level of a fourth pair of quarter-quarter-blocks;

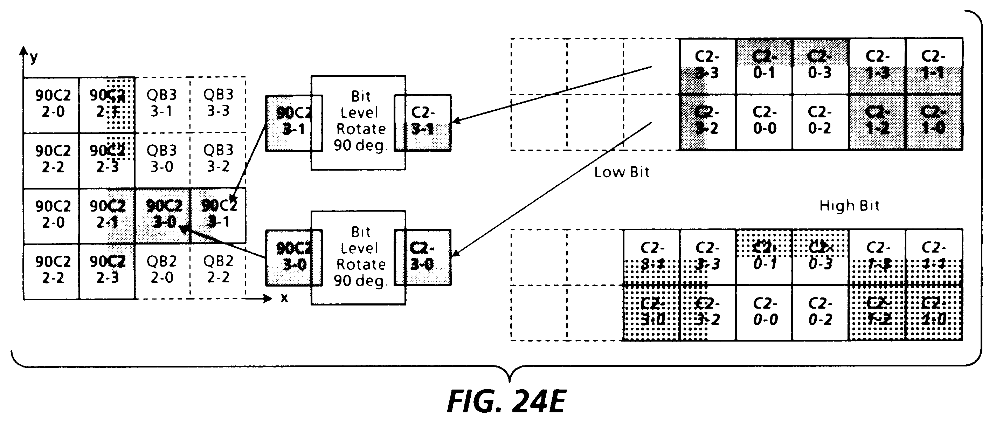

Figure 24E illustrates, for those two colors, 90 degree rotation to bit level of a fifth pair of quarter-quarter-blocks;

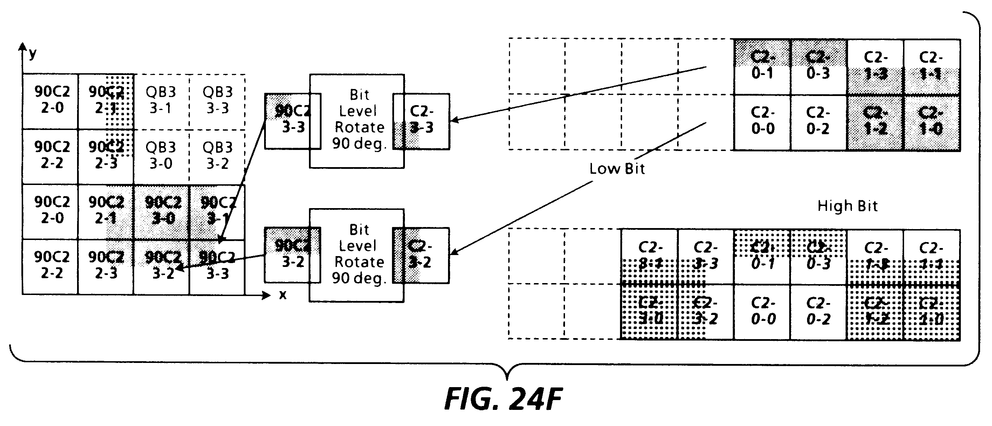

Figure 24F illustrates, for those two colors, 90 degree rotation to bit level of a sixth pair of quarter-quarter-blocks;

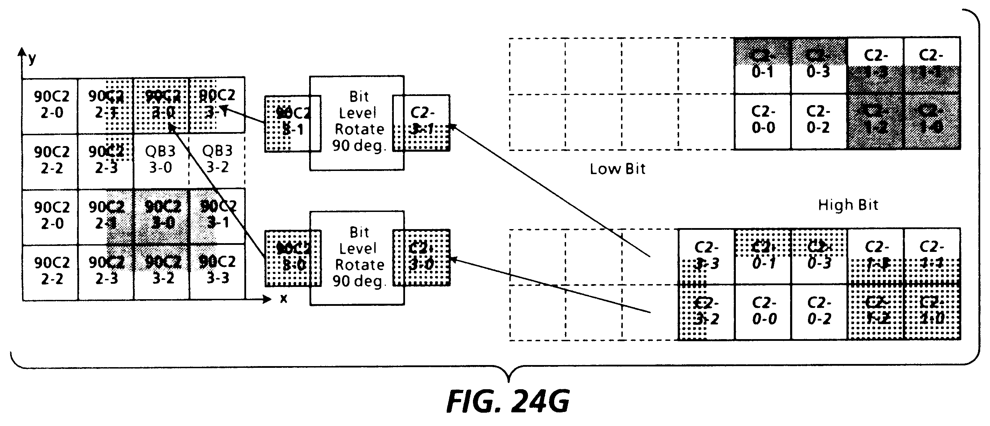

Figure 24G illustrates, for those two colors, 90 degree rotation to bit level of a seventh pair of quarter-quarter-blocks;

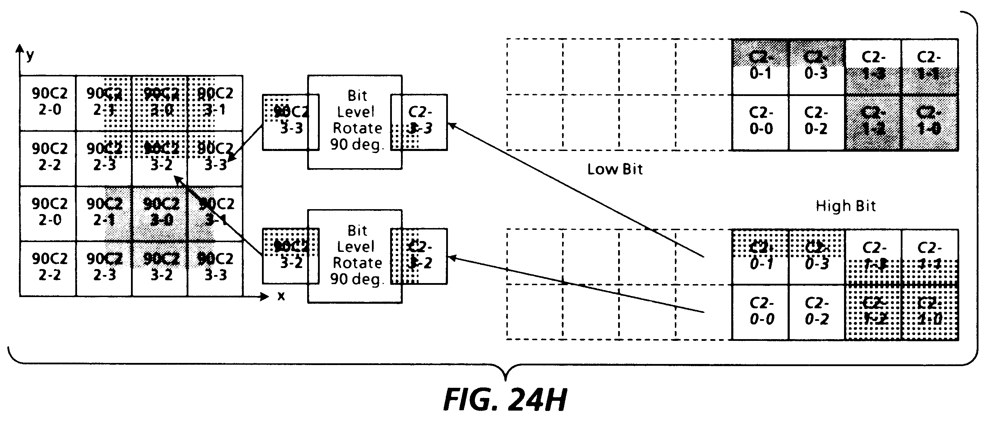

Figure 24H illustrates, for those two colors, 90 degree rotation to bit level of an eighth pair of quarter-quarter-blocks; and

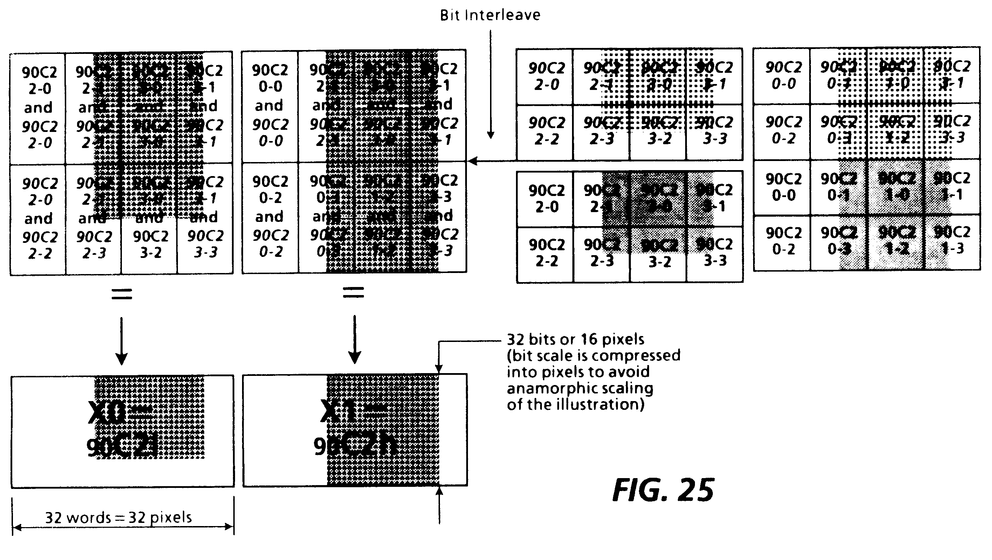

Figure 25 shows how one block from each bit separation band buffer makes up two rotated blocks or two page image halfcells of sixteen 2-bit pixels x 32 scans.

Cell Band Rotation supports page image creation using the cell band page image format. The rotation and reflection provided by Cell Band Rotation permit objects to be stored in one orientation, but to be transferred to the page image as if they were stored in any one of eight orientations related by rotation by multiples of 90 degrees and reflection about a scanned axis.

Objects to be rotated must have sequential scanlines scanned in the same direction along the fast axis (labeled y) as the rasterization steps along the slow axis (labeled x.) The object's data stream must be presented in scan order.

The traditional or "scan-ordered" page image format assigns bits within memory words to pixels adjacent in fast scan direction and sequential word addresses are also assigned to pixels adjacent along the fast scan direction.

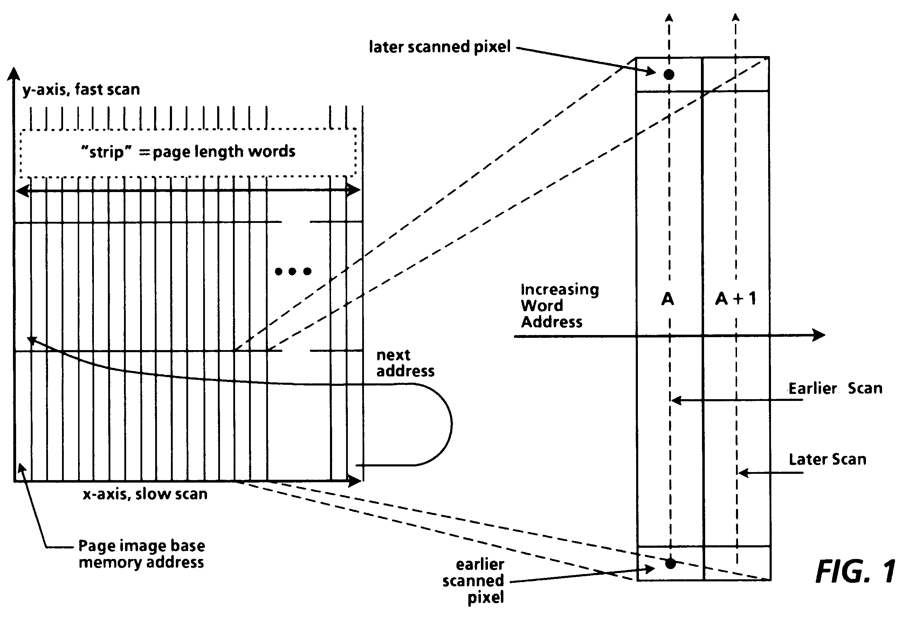

The cell band format assigns bits within a processor word (e.g. quadbyte) to pixels along the fast scan direction. However, the next sequential word address is assigned to pixels adjacent in the slow direction as shown in Figure 1. "Strips" are groups of sequential words with a word for each portion of a scan line along the page length. Sequential strips contain pixels adjacent in the fast scan direction. A full page image is built up of strips.

The name "cell band" comes from the processing order and data blocking used with the format page image format. The processing order traverses the raster from the origin of the object, proceeds up the fast scan or y-axis to the object boundary, returns to the slow scan or x-axis then steps up the x-axis to scan the next column of the object. Data are processed in blocks or cells which are many scans by many pixels, typically 32x32. As cells adjacent in the fast scan direction are written to the page image a multiple-scan "band" of cells (or blocks) is painted.

A novel part of Cell Band Rotation is to a divide an object into blocks, quarter-blocks (qb) and quarter-quarter-blocks (qqb) and to rotate by reordering blocks and their subdivisions without reordering the bits within them. When the subdivision contains few enough bits, a direct approach to bit rotation may be economically applied.

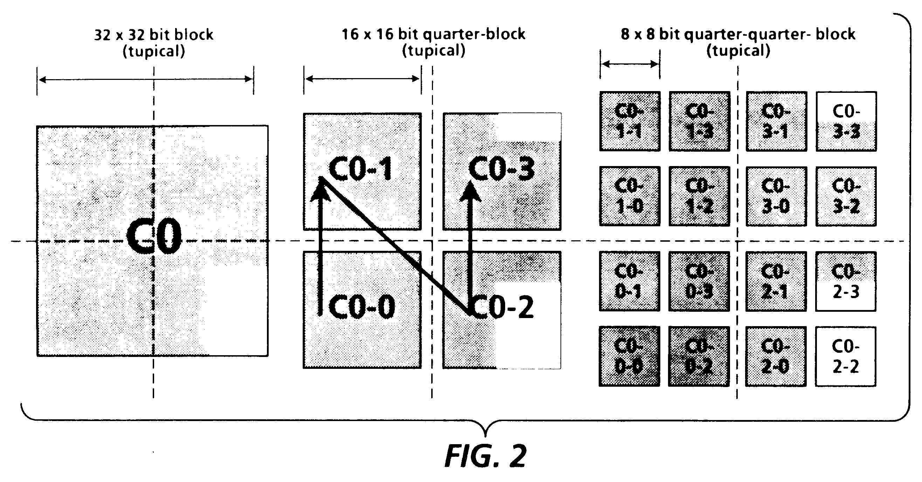

Labeling conventions for subdivisions of blocks into quarter -block (qb) and quarter-quarter-blocks (qqb) are shown in Figure 2 and used throughout the example figures and facilitate illustration. The numbering is derived from the order in which the scanning process intercepts block or sub-blocks, so C0 would be scanned before C1, etc. and C0-2 would be scanned before C0-3, etc.

3

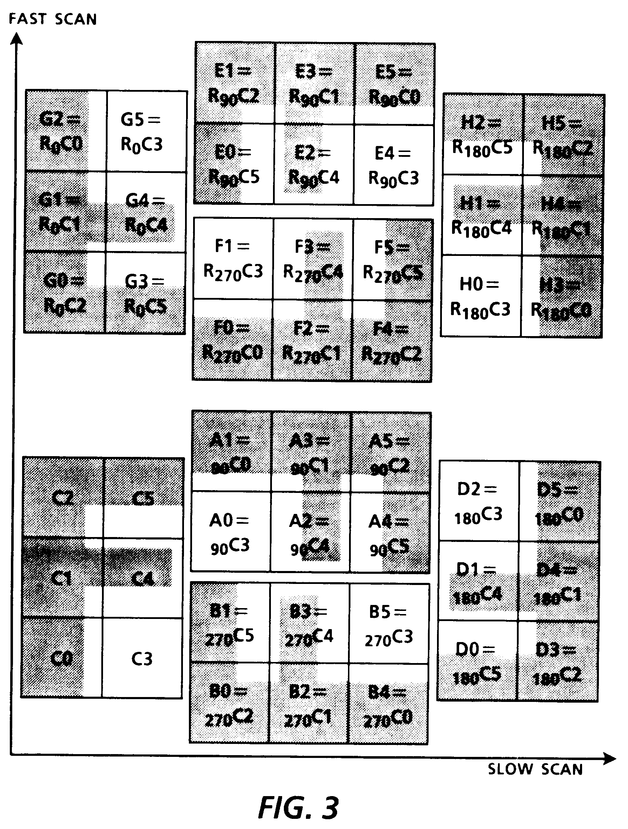

Figure 3 shows the eight related orientations, using the letter "F" as an example. Eight different objects could each be stored as six 32x32 bit blocks as indicated by the labels A0...A5, B0...B5, through G0...G5. The "normal" orientation in the diagram happens to be C0...C5, so the other orientations are labeled " = RxxxCN" as they would be derived from C0...C5 by:

● reflection along Cn's fast axis, indicated by R,

● rotation by a multiple of 90 degrees, indicated by xxx degrees

● reordering of the blocks, indicated by A0 being derived from C3, etc.

This figure illustrates block reordering, which is applied in general to rectangular objects. The blocks are stored in the band buffer from lowest number to highest, or in the order scanned to take advantage of the high performance serial port of the dual port video DRAM.

The primary usefulness is for rotating characters and pixel arrays by multiples of 90 degrees. The mirror images are included so that pixel arrays captured with the one scan direction opposed to the printer's can be corrected without preprocessing.

The Cell Band Rotation logic consists of:

● two sources of scan line pixels

● a band buffer per source

● the Block Rotator ASIC with support for:

- address generation and control for two sources writing the band buffer

- multiple bit rotators, each capable of handling an 8x8 block

- 2 block buffers, each holding a 32x32 bit block

- an interleave multiplexer to interdigitate bits into pixels for 2 color applications

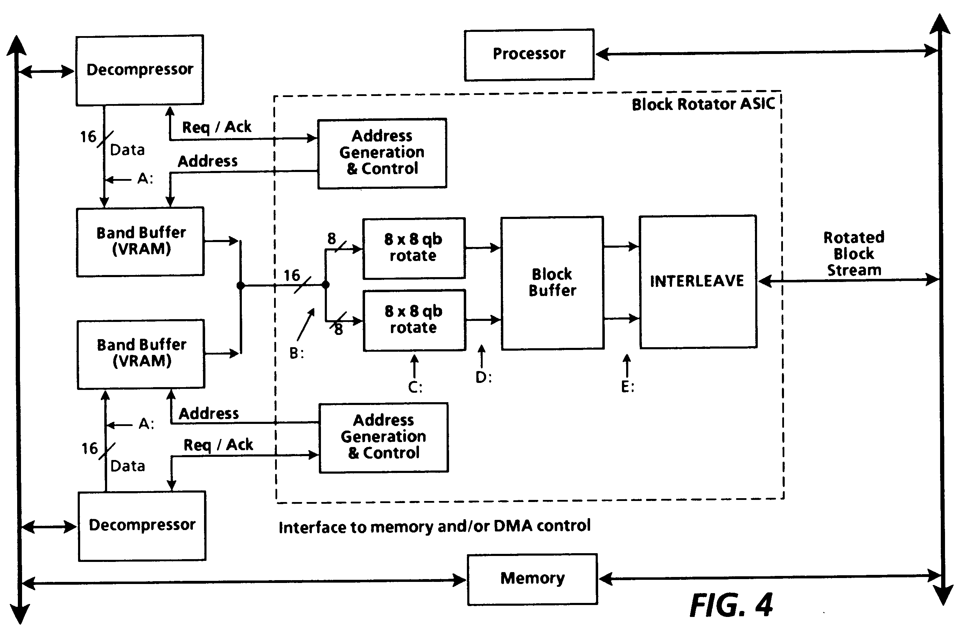

The data source is typically an ASIC with the ability to transfer raw pixel arrays from memory or to transfer compressed pixel arrays and expand them. An example source in Figure 4 is labeled "Decompressor" and provides a two byte wide streaming interface with a Req/Ack interface and miscellaneous controls.

The band buffer uses the dual port video DRAM and the decompressor stream is written into the band buffer under control of the ASIC, which generates the addresses and controls.

The Block Rotator ASIC also reads band buffer(s) serial port when the entire object or fragment is loaded, finishes the rotation operation, buffers up blocks and streams them to the processor bus.

Operation:

The rotator accepts a scan ordered stream of pixels , typically 16 bits wide. This stream is buffered in a 16 bit wide dual port video DRAM to accumulate all the scans needed to make up at least one cell for rotation. The buffer then contains at least one full row of cells for rotation, typically several rows. Objects that exceed the buffer size are fragmented and software repositions fragments according to the requested rotation. A five step process distributes the rotation tasks over the data flow. The rotator provides the processor completely reordered 32 x 32 blocks of bits, as if the object were originally stored in cell-band ordered blocks at the desired rotation/reflection.

Step A: Reorder blocks and quarter-blocks within blocks

Scatter write techniques are applied at two levels as scan oriented words are written into the buffer accomplishing 32 x 32 bit block reordering and 16 x 16 quarter-block reordering:

Block Reordering: 32 x 32 bit blocks are positioned in VRAM so that blocks may be accessed sequentially from the serial VRAM serial port in the following processing order: start with the (rotated) cell nearest the origin and proceed along the y-axis, then return for the next column of cells again starting nearest the slow axis, filling VRAM memory sequentially.

Quarter-block Reordering: The VRAM is two bytes wide, so each block uses 64 addresses. 16 x 16 quarter-blocks (qb0..qb3) are defined and written into different 16 word offsets within the block's 64 words depending on the requested rotation/reflection.

Step B: Split into quarter-quarter-blocks:

The rotator reads a reordered quarter-block stream from the serial port of the VRAM; completes bit reordering of bits within 8x8 quarter-quarter-blocks (qqb); reorders the qqb's; and delivers a block stream to the processor.

Step C: Reorder bits within quarter-quarter-blocks

Bit Reordering: As eight doublebytes are transferred from the VRAM, they fill two 8x8 register sets (four sets to double buffer the data flow). As the eight bytes are read out of the registers they are read in the bit order of the requested rotation/reflection.

Step D: Reorder quarter-quarter-blocks as assembled into output block

Quarter-quarter-block Reordering: The bit reordered 8x8 qqb's are then accumulated into half-block buffers in the appropriate position through data steering and sent on to the processor as (16) quadbytes. Double buffering to maintain the continuous movement of data uses (12) 16 x 8 ram cells with appropriate interconnections.

Step E: Interleave bits into pixels for 2 toner images

Parallel sources may be used for higher performance, but are supported primarily for two color objects printed on two color printers. The rotator can support bit separations of two bit per pixel rasters with each source providing one of the bits, accept alternate quarter-blocks from the VRAM holding the separate bits of the same pixel, rotate the quarter blocks serially, accumulate them into independent halves of the block buffer and interleave the bits to provide the processor with a block of 32 quadbytes, each containing sixteen packed, two bit pixels. This device dependent raster storage format permits parallel decompression at the sources and prevents spatial interference between bits of the 2 toners from degrading compression ratios.

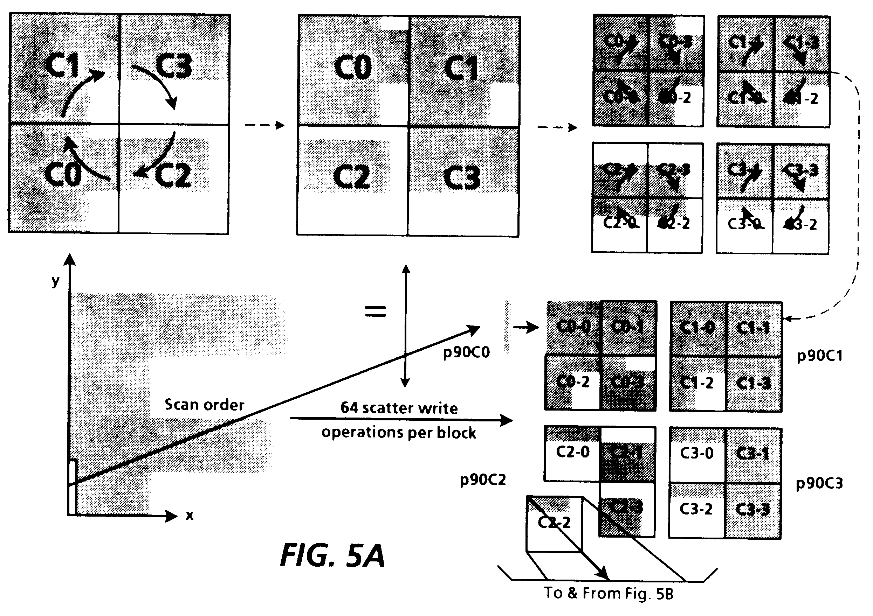

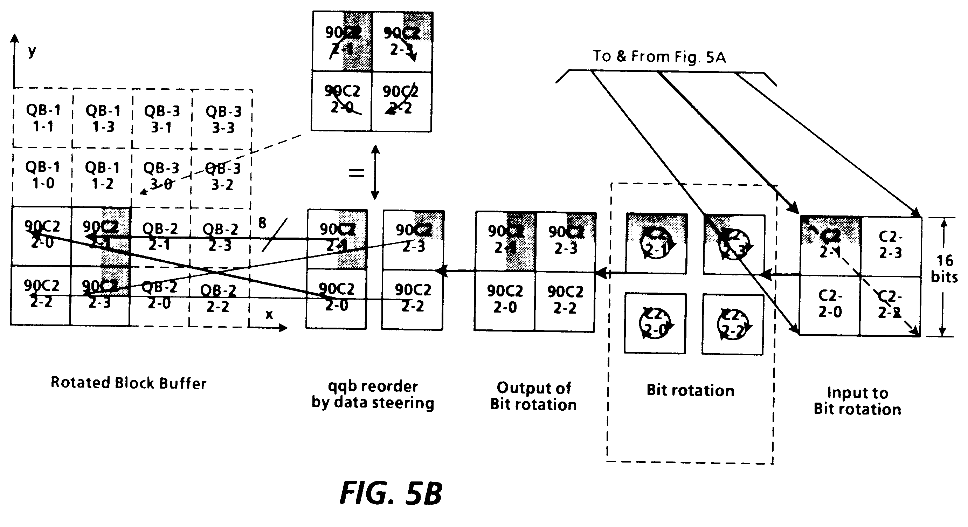

Figure 5 (A and B) illustrates the result of Steps A-D as if displayed on the page.

Detailed Description: Object Write

The object write operation moves an entire object into the VRAM band buffer. If the object is too big or lower latency is desired a fragment of the object may be handled instead. The rotation logic generates scatter write addresses that permute block and quarter-block order upon writing into the band buffer. After the entire object is in the band buffer, the (high bandwidth) serial access port of the VRAM band buffer presents a quarter-block stream to the rotation logic in the order that the quarterblocks and blocks are required by the processor. The rotation logic finishes the rotation and delivers the block stream to the processor to be processed in the same order, independent of the rotation performed. The only difference in the processor's operation is the address calculation for initial placement of the object (or fragment), the change in masking parameters with rotation and the calculation of rotation parameters.

The rotation logic uses a double base register addressing scheme to accomplish the scatter write. The two address base registers are named SlowBase and FastBase. The slow base and the fast base addresses are oriented to the source object so they may be either the X or Y direction of the resultant page depending on the requested rotation. The fast base is reinitialized every scan after the full scanline of data is transferred from the data source. The slow base is updated every block-width scanlines (32 scanlines in the example implementation.)

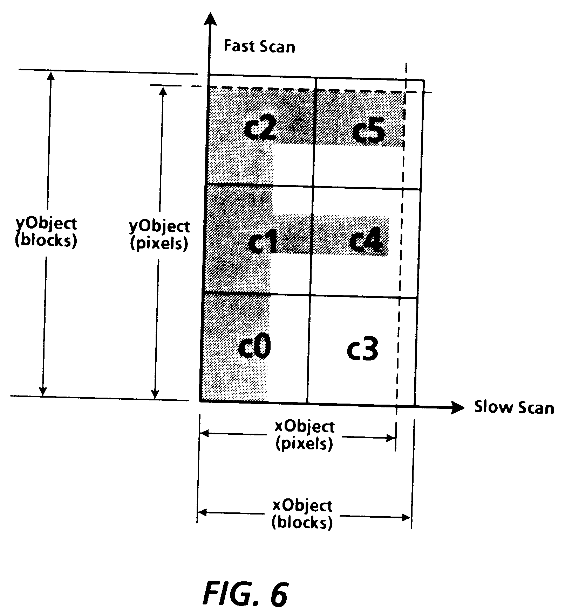

The object size is in pixels, however, the rotation logic deals with object sizes in 32 x 32 blocks so object sizes are rounded up to block sizes or ObjectSizeinBlocks = (ObjectSizeinPixels + BlockSize - 1)- DIV BlockSize. Object dimension conventions are shown in Figure 6.

The address generation logic reserves 32 x 32 blocks of address space in the VRAM band buffer, even if fewer scans are actually written by the end of the object. The resulting invalid data passed to the processor may either be excess scans of invalid bits within a word, depending on the requested rotation. The data source also provides padding along the fast scan to 32 bit boundaries that may result in invalid bits. The processor is responsible for clipping to pixel boundaries by discarding invalid scans or masking invalid bits as they are transferred to the page image.

The rotation logic accepts parameters to control its operation. Parameters include:

- the requested rotation/reflection i.e. 0,90,180,270,R0,R90,R180,R270
- the mode (monochrome or two color)
- the permutation values in Table 1 and Table 2 (below) may be fixed
- the FastInit (FastBase) and FastStep values as shown in Table 3 (below).
- the SlowBase and SlowStep values (increments of 64 words for 32 x 32 blocks)

Note that the quarter-block order permutation changes from monochrome to two color. This is the result of adopting a packed pixel format for two color printing, so that the block buffer is filled with only one quarter-block from each bit separation (the raster containing the high order bit of all pixels and the raster containing the low order bit of all pixels.)

The data source interface provides signals enabling the rotation logic to recognize the end of a scanlines and count them.

The FastBase is updated by FastStep every two doublebytes and is reinitialized every scan. TheSlowBase is initialized to the position that the first source block (C0 in the example) occupies in rotated block order. The position calculations are generalized for arbitrary xBlock and yBlock as these vary with object size. The SlowBase is updated by SlowStep every block height (32) scans. The block address is built by adding the SlowBase and FastBase both of which are 64 doublebyte, block addresses. Within the 64 word (doublebyte) block the permuted quarter block offset select a group of 16 words and the scan offset or ScanCounter3:0 select one of these 16 words. The following pseudo PASCAL procedure describes the process of accepting data a scan at a time and generating the appropriate scatter-write word address to write the VRAM band buffer

```
PROCEDURE WriteObject (rotation, mode)
{Input stream from data source not shown,  modeled as Input2Byte and a command to pop the
source queue: Next Input2Byte}
VAR
            scan: integer;
            {index to scanline of object, data source  interface provides end scan signals}
            qbi: integer;
            {quarter block index: steps across scanline in doubleByte increments}
            FastInit, FastBase, FastStep: Integer;
            {Address Generation parameters along the fast direction}
            SlowBase, SlowStep: Integer;
            {Address Generation parameters along the slow direction}
BEGIN
            CASE Rotation OF
                {see table for values of FastInit, SlowBase, FastStep and SlowStep for each rotation}
            END; {Case}
            FOR scan : = 0 to xObject -1 DO
                BEGIN
                    FastBase : = FastInit; {Reinitialize FastBase at the start of each scanline}
                    IF (scan and $10) = 0 THEN qbi : = qbi AND $2 ELSE qbi : = qbi OR $1;
                    {clear (set) high order bit of quarter block index for alternate sets of
                    quarterblocks}
                    FOR qblock : = 0 TO (2*yBlock -1) DO {process words from each quarter block
                    identically}
                        IF (qblock and $1) = 0 THEN qbi : = qbi AND $2 ELSE qbi : = qbi OR $1;
                        {toggle lsb of quarter block index: 0 -> 1 -> 0 ...  or   2 -> 3 -> 2 ... }
                        QBbase : = (BlockSize DIV 4) * Permute (qbi, Mode);
                        {see table for qb permutation for one and two colors}
                        ScanOffset : = scan MOD 16;
                        VRAM (SlowBase + FastBase + QBbase + ScanOffset) : = {Input2byte};
                        { Next Input2Byte; }


                        IF (qblock MOD 2 ) = 1 {end of second word so step to next block }
                            THEN FastBase : = FastBase + FastStep;
                    END;
                IF (scan MOD 32) = 31 {after the nth  BlockSize (32nd) scanline, step in the slow direction}
                    THEN SlowBase : = SlowBase + SlowStep;
            END; {Write Object}
```

7

EP 0 609 622 A1

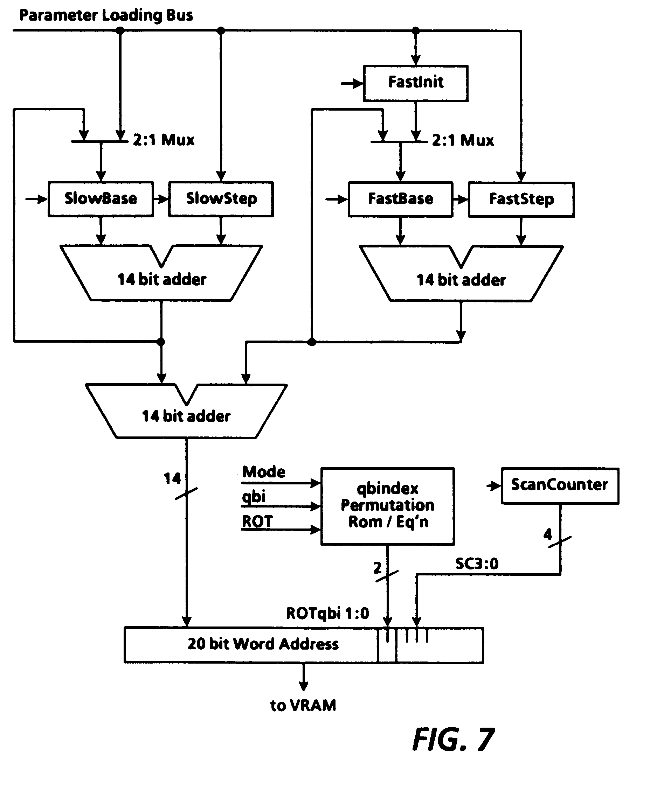

This routine is actually implemented in hardware a conceptual block diagram of which is shown in Figure 7. The scan offset and quarter block offsets are fixed so they are concatenated to the end of the base address. The Fast and Slow base addresses are added together. The 14 bit width accommodates a 1M x 4 VRAM, a wider or smaller VRAM would require fewer bits. Another bit would be used to split the band buffer into two concurrent load and unload.

Detailed Description: Rotator Data Path

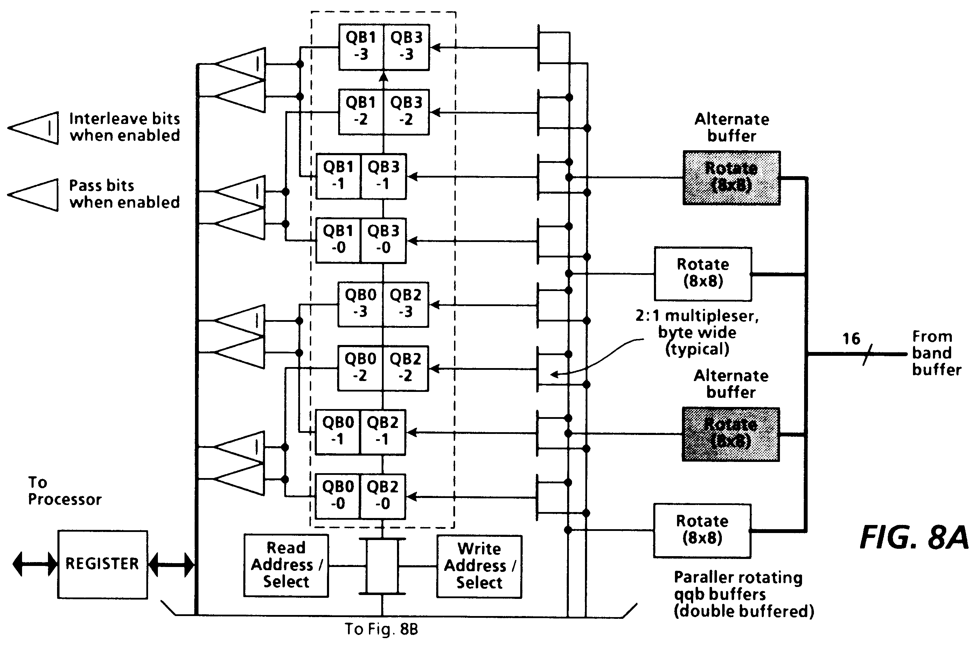

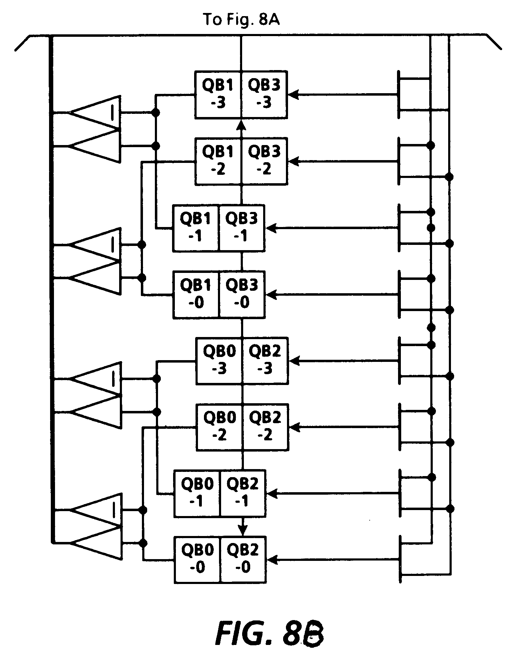

Bit rotation is handled in the first buffering stage. The quarter-block stream is unloaded in bursts of eight doublebytes, shown on the right side of figure 8. These are separated into two byte streams and loaded into two bit rotating 8x8 qqb buffers. These parallel 8x8 bit rotators are double buffered so there are four of them in total. One pair is being loaded as the other is being unloaded.

The output of the unloading pair is routed to one of four qqb's in the currently active quarter-block. Since any pair of the four qqb's may be written at once the output of both qqb bit rotators is routed to all qqb buffers. The two byte wide buses into each 16 byte RAM block accomplishes this distribution in conjunction with the 2:1 multiplexer at the write data input. The qqb order is permuted by routing according to Table 4 (below). Note that this is the same permutation as monochrome qb reordering.

Just as monochrome and two color qb order permutation differs so does the method of accumulating quarter-blocks into blocks for the processor. Table 5 (below) shows the direct placement of qb's from the VRAM to the block buffer, that is the earliest qb from the band buffer is placed in QB0, etc. Table 6 (below) shows the two color qb routing where alternate quarterblocks from the VRAM associated with each bit separation (high bit or low bit) are placed in adjacent QB's in the block buffer.

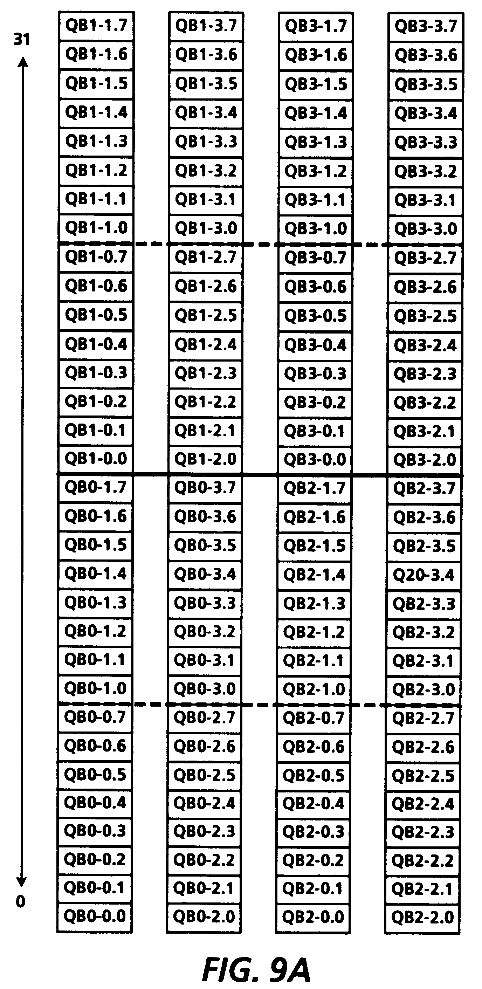

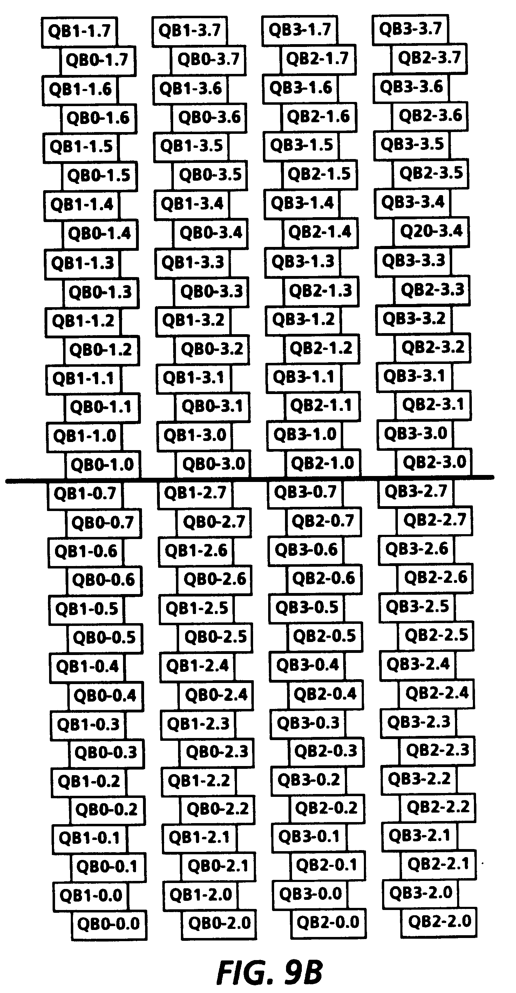

Figure 8 (A and B) also shows the interleaving multiplexer as two sets of tri-state buffers driving the selected QBx-x data onto a 32 bit bus. Either rotated qqb may be steered to any qqb in the current qb and half block (QB0/QB1 or QB2/QB3). Figure 9 (A and B) details the bit interleaving of the hardware block buffer elements. The result of the bit interleaving, combined with the two color quarter-block loading order, results in packed 2-bit pixels each containing corresponding bits of high and low bit rasters.

Detailed Description: Bit Rotation

The bit rotation logic could be handled as an array of 64 flip-flops and wiring equations delivering the desired eight outputs for each mode and rotation/reflection.

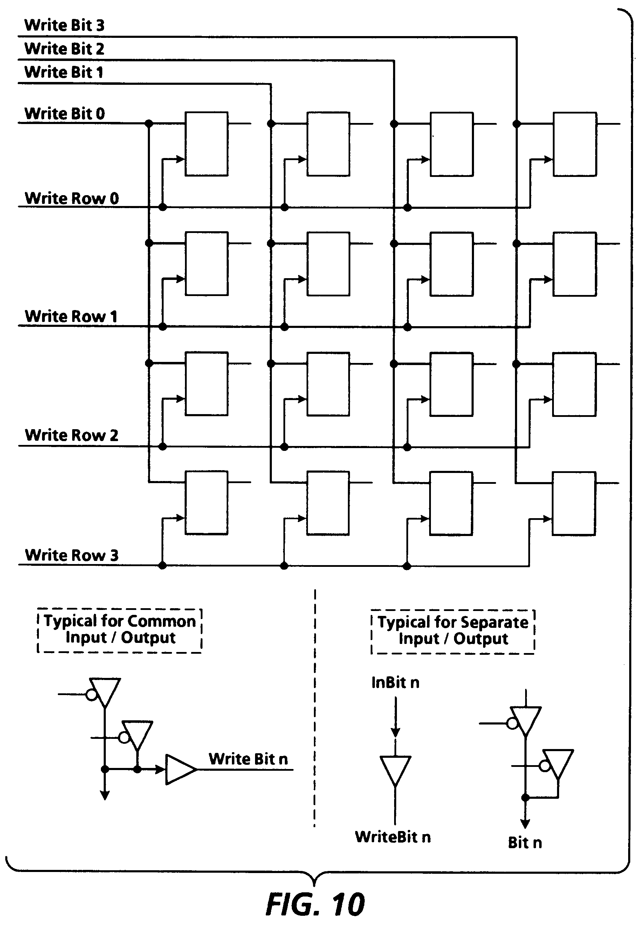

A more interesting approach is a static RAM structure shown in the drawings, in Figures 10 to 16, in two major variant with logic elements rather than bit cell circuits. Both approaches are viable logic cells may be directly implemented in EPLD's or gate arrays with normal costs.

Special RAM cells with extra write lines or read lines are not typically available in standard cell libraries and would require special development.

These examples of the two major variants (A & B) of the RAM configuration are illustrated in a 4 x 4 bit array, although a general n x n array is intended. The 8x8 rotator shown in the diagrams is the size expected in practice to be achieved.

By combining the following capabilities with the basic RAM cell a logic element is achieved in which internal operation, parameterized by invoking or bypassing these features performs bit rotation within the same data and control flow:

- row and column access
- address bit inversion
- data bit reversal

Further internalization of the address results in a block FIFO that rotates 8 x 8 blocks as they flow through the FIFO.

Address inversion applies to reverse word order for configuration A or B:

000 -> 111
001 -> 110
010 -> 101
011 -> 100
100 -> 011
101 -> 010
110 -> 001
111 -> 000

Data bit reversal supports reflection as well as normal rotation.

8

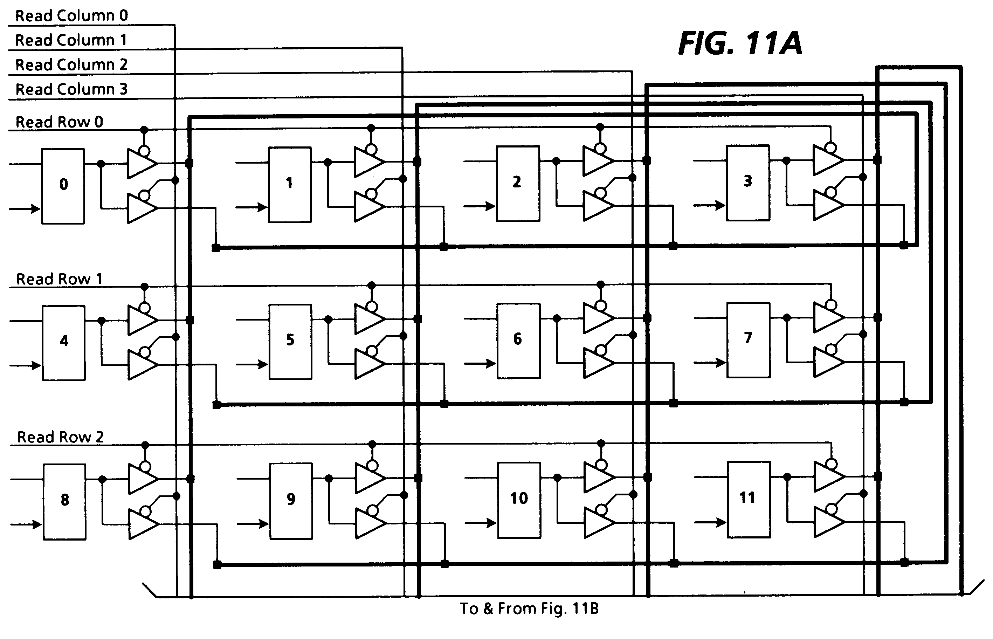

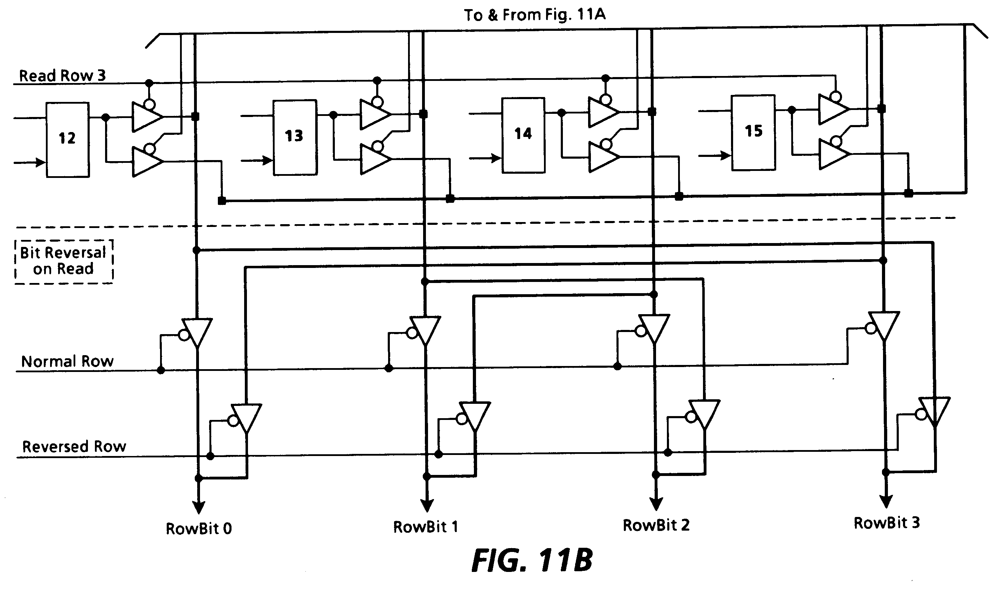

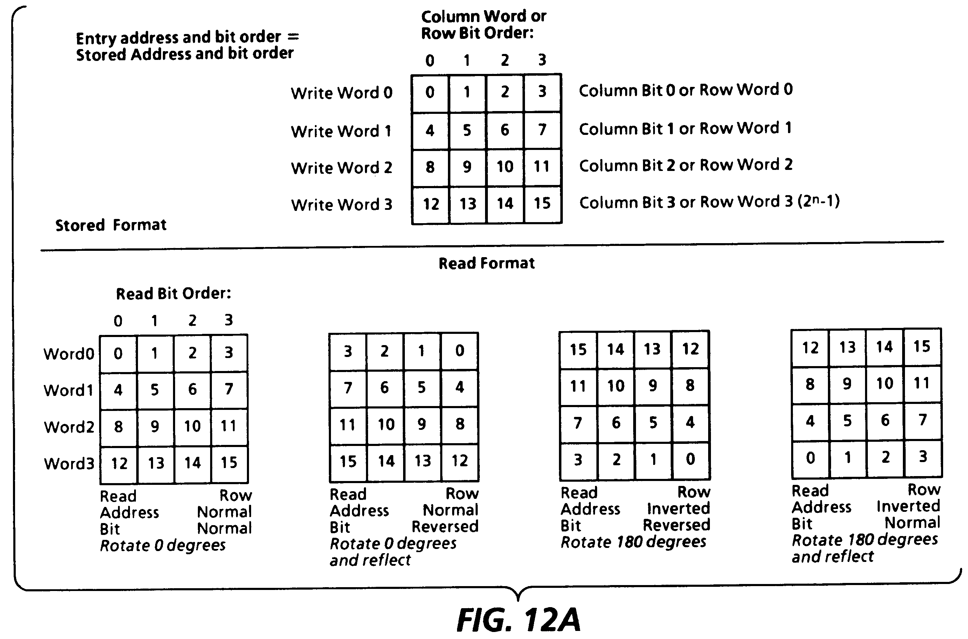

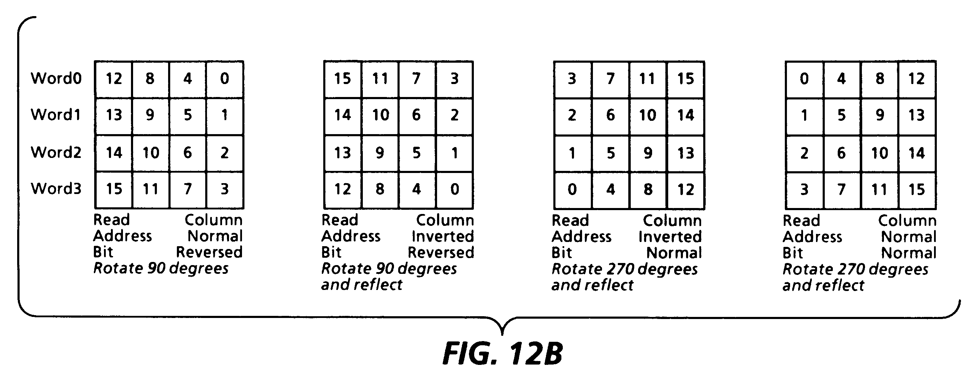

Configuration A has normal write logic. A single row of the RAM may be written, write addresses are normal and write data is not reversed. However additional read logic supports read address inversion, read data bit reversal and either row and column access. Figure 10 illustrates the typical write logic while Figure 11 (A and B) shows the extra read lines shown as tri-state buses with driver isolation. Figure 12 (A and B) shows that the data are stored in one format, but may be read out in eight different formats

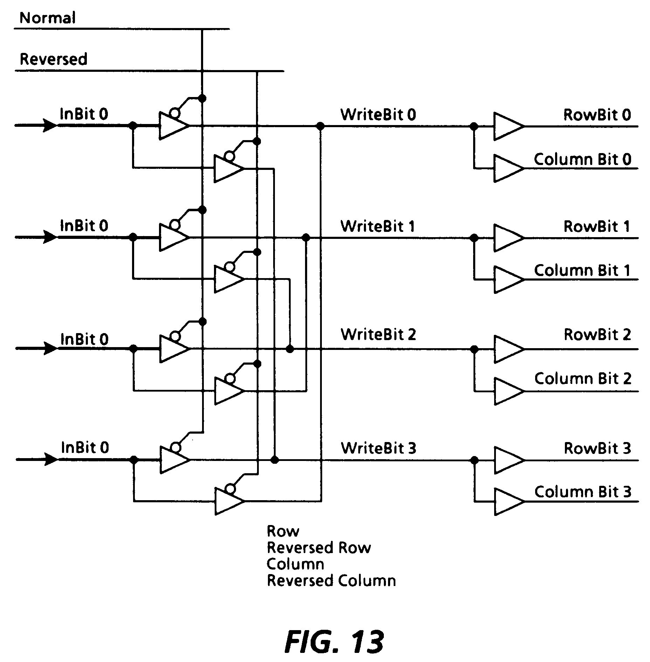

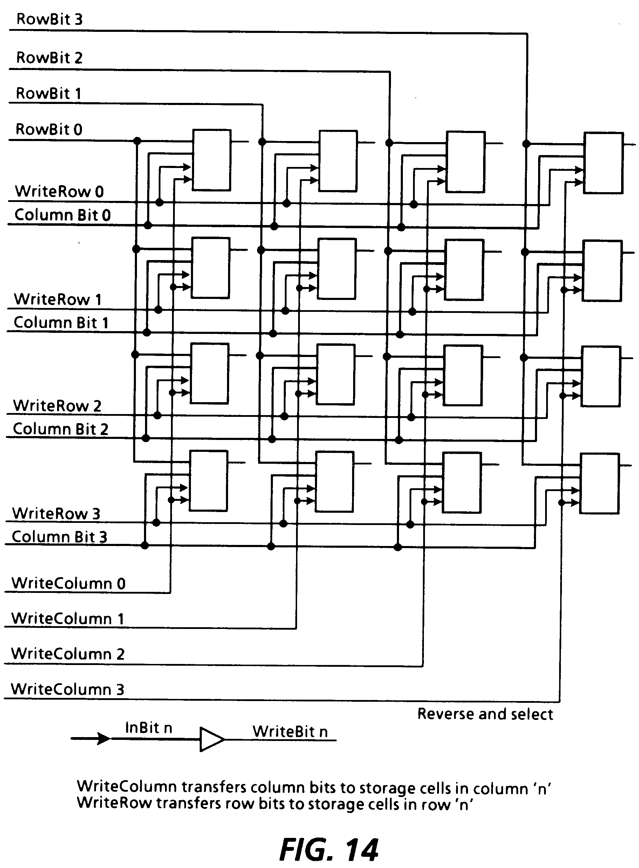

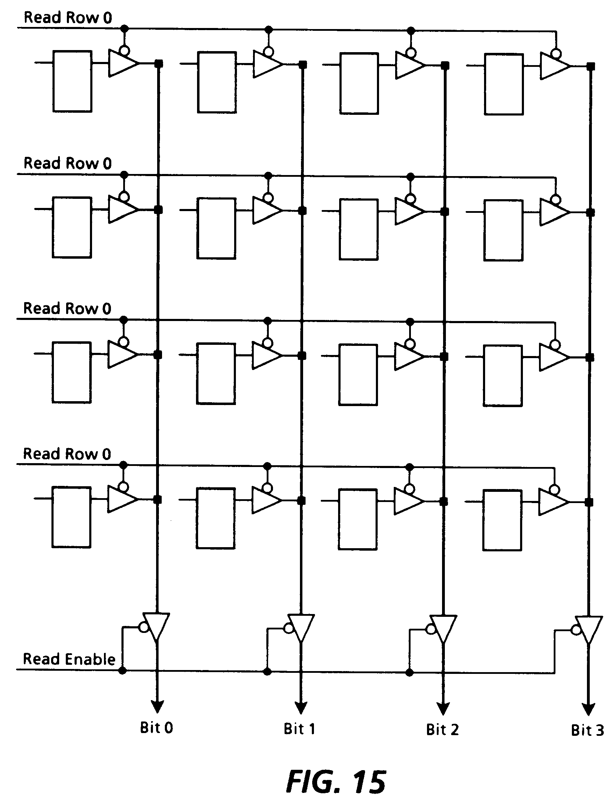

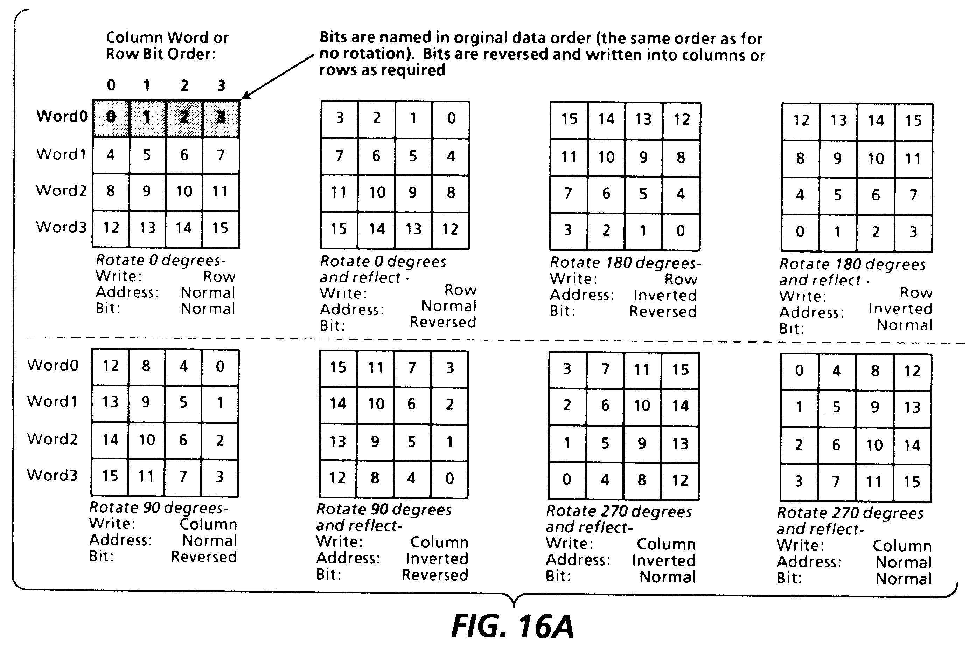

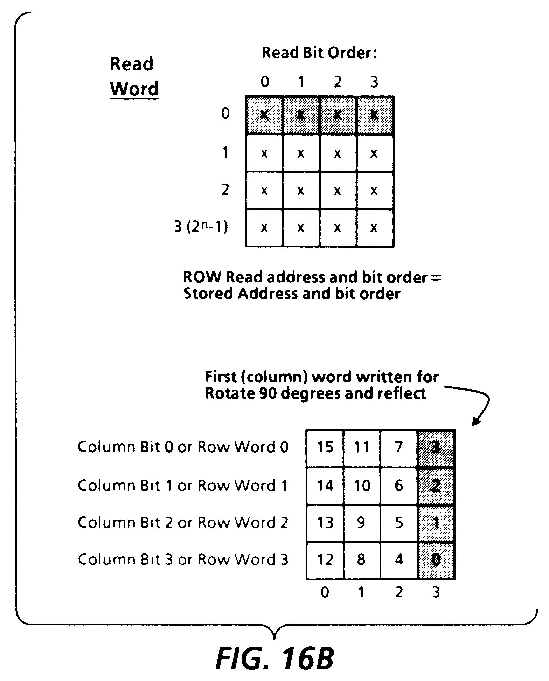

Configuration B has normal read logic. A single row of the RAM may be read, read addresses are normal and read data is not reversed. However, additional write logic supports write address inversion, write data bit reversal and access to write either rows and columns. Figure 13 and Figure 14 illustrate the special write logic, depicting two data inputs to each cell with its associated clock to load data into either rows or columns. Figure 15 shows the normal read access. Figure 16 (A and B) shows the data are stored in eight formats, each of which may be read out without further changes.

Detailed operation: block sequencing.

The processor determines the page buffer starting location, calculates the parameters for the rotator, and initiates the object source data transfer. The processor then handles each block of the object (or fragments of large object) in cell band order, the same way for all orientations. The rotation logic imposes a 32 x 32 block size that is not otherwise a restriction on the processor BitBIT operation.

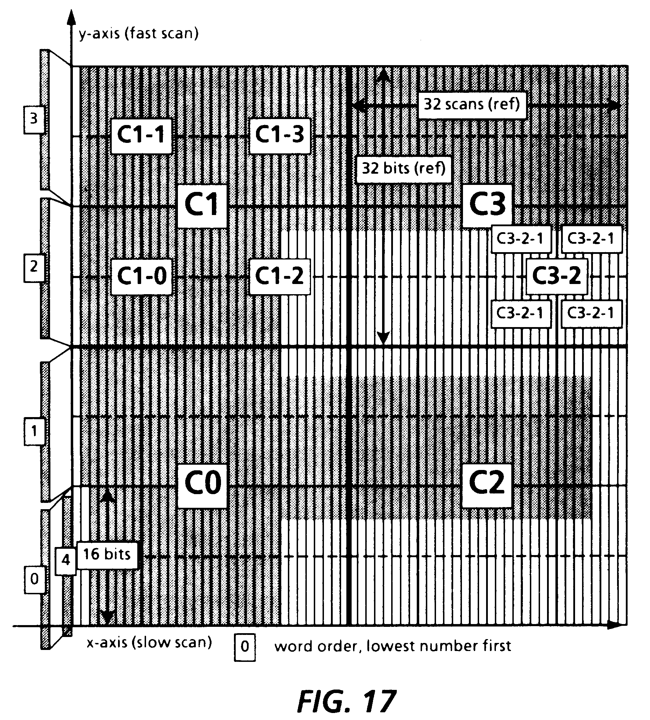

Figure 17 shows the example object as stored in memory. The scan ordered source data stream sequence into VRAM (two bytes wide) is also shown. The labels attached to the data for the purpose of discussion are shown for various level of data grouping.

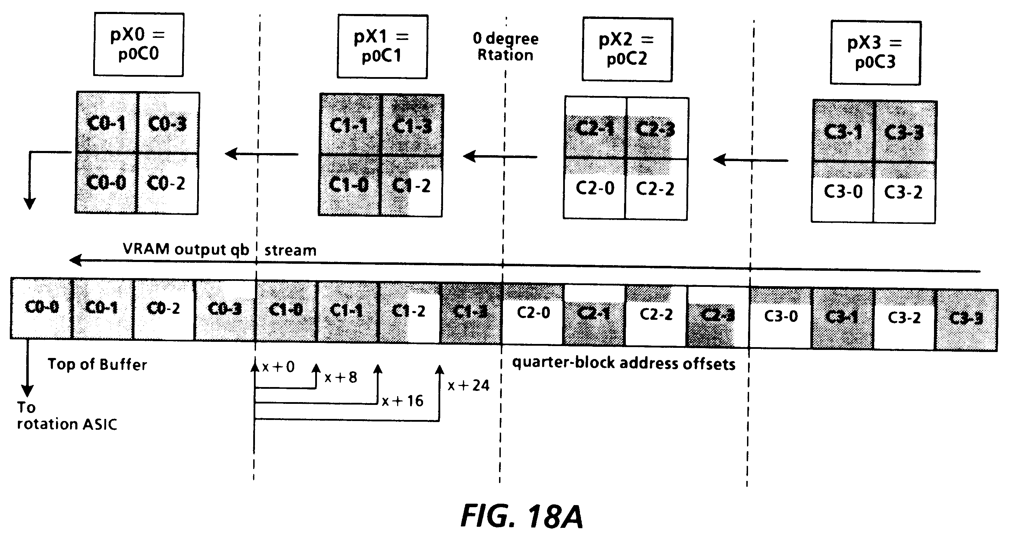

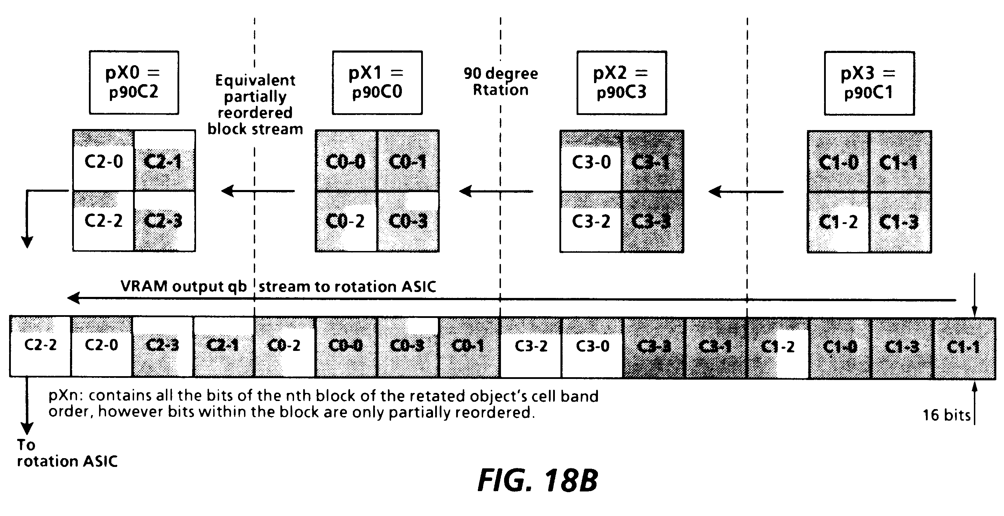

Figure 18 (A and B) shows the example object in the band buffer with blocks and quarter blocks reordered for both 0 and 90 degree rotation. The output of the band buffer is a 16 bit with stream. Each set of 16 doublebytes is a quarter-block, so the output may be thought of as a qb stream. The order of quarter blocks with 64 doublebyte blocks is already permuted according to the desired rotation/reflection, so band buffer output may alternately be considered as a partially reordered block stream, as shown above the qb stream depicted in the figure. The block stream is reconstructed in cell band order with earliest = 0 and latest = 3.

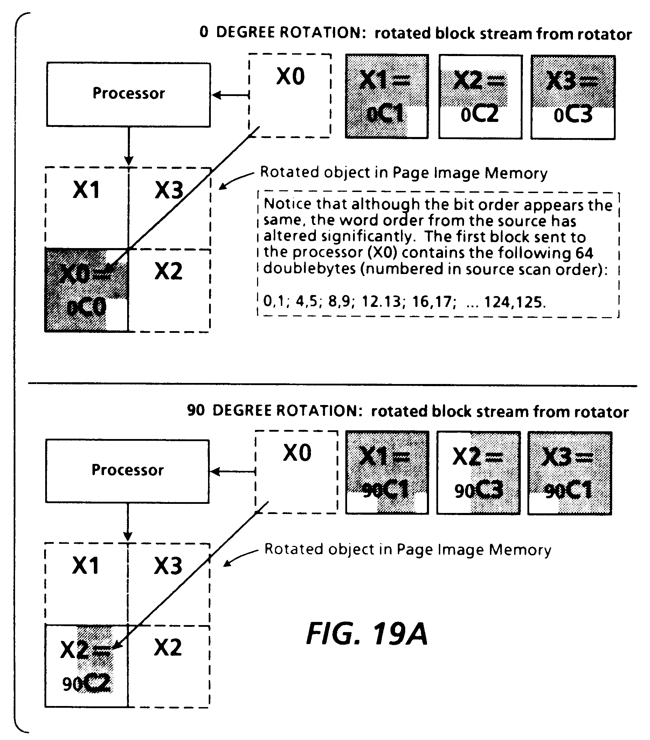

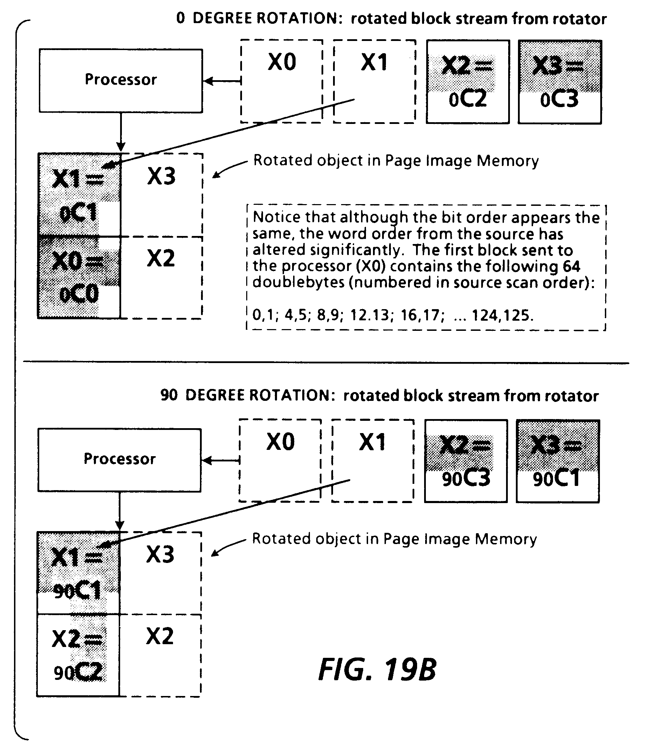

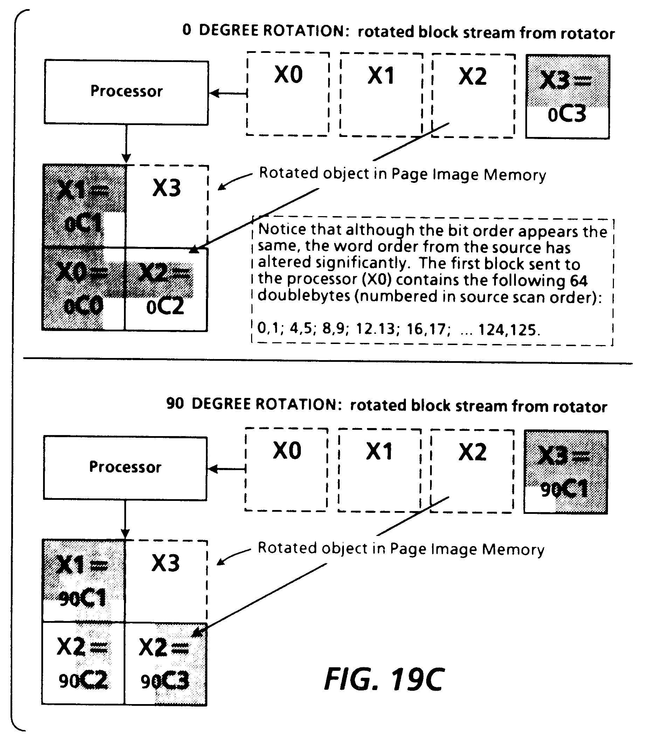

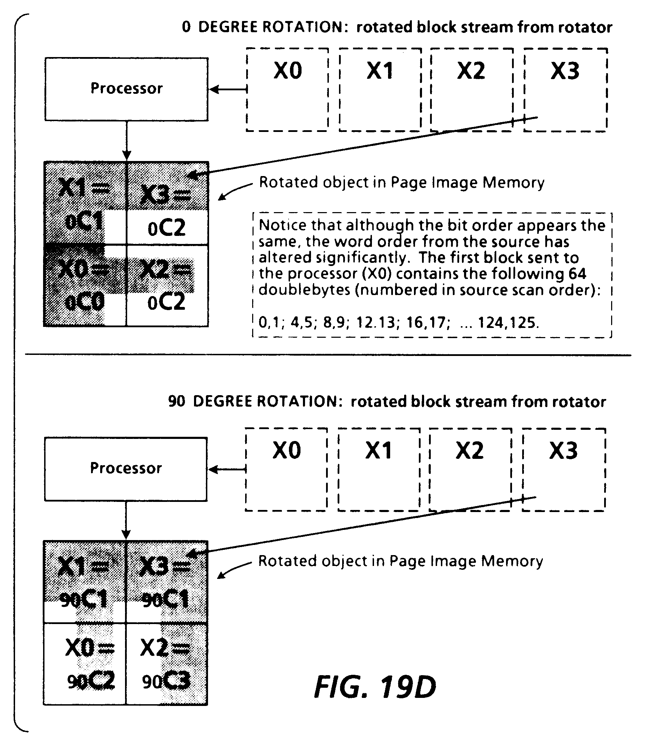

Figures 19A-D. show the block sequence from rotator to the processor and into the page image for 0 (top) and 90 degrees (bottom.)

Detailed operation: qb sequence

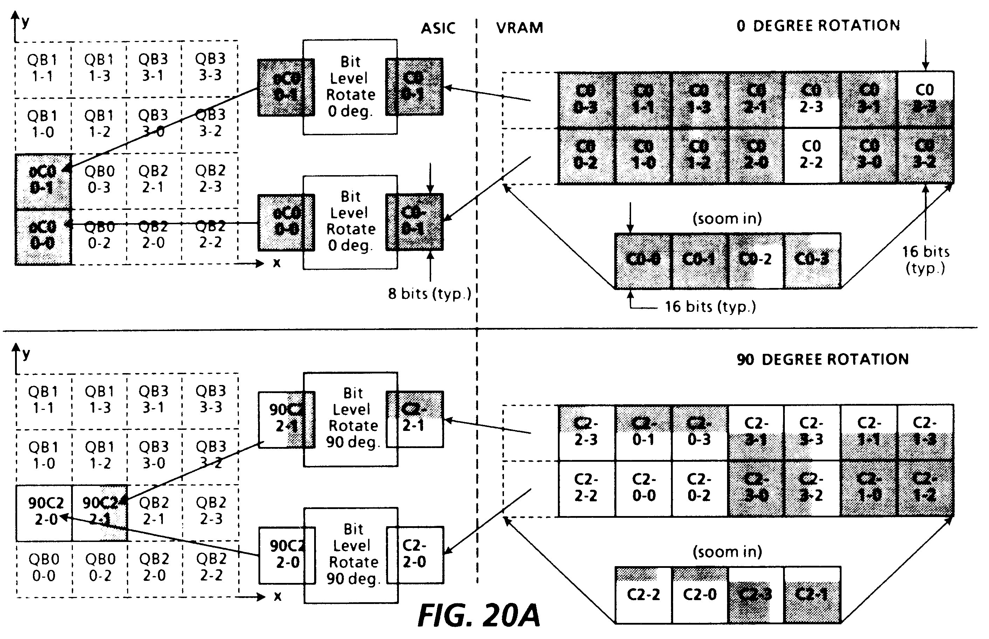

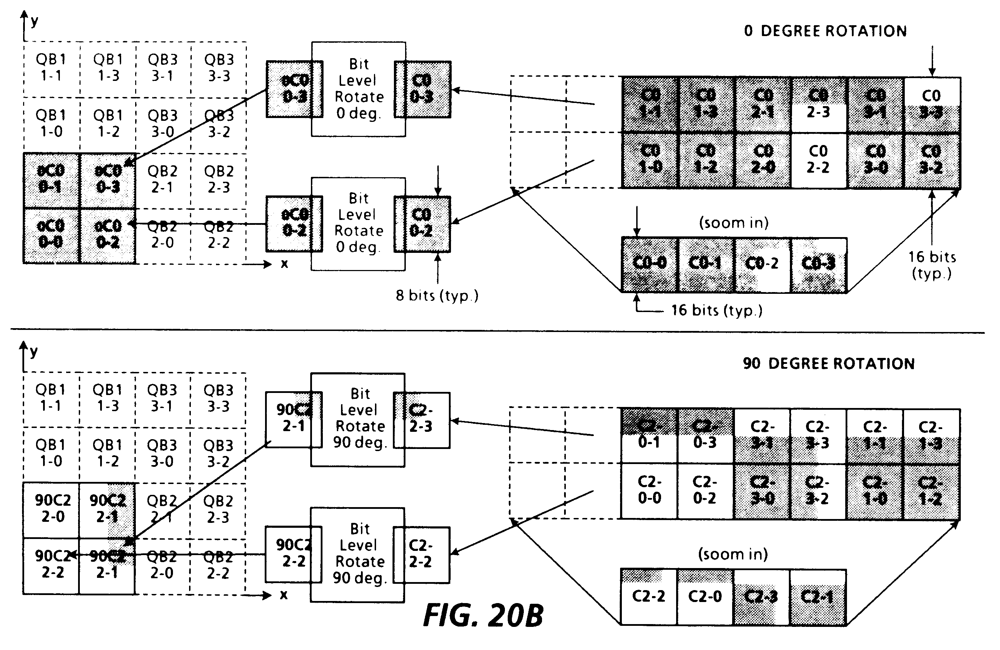

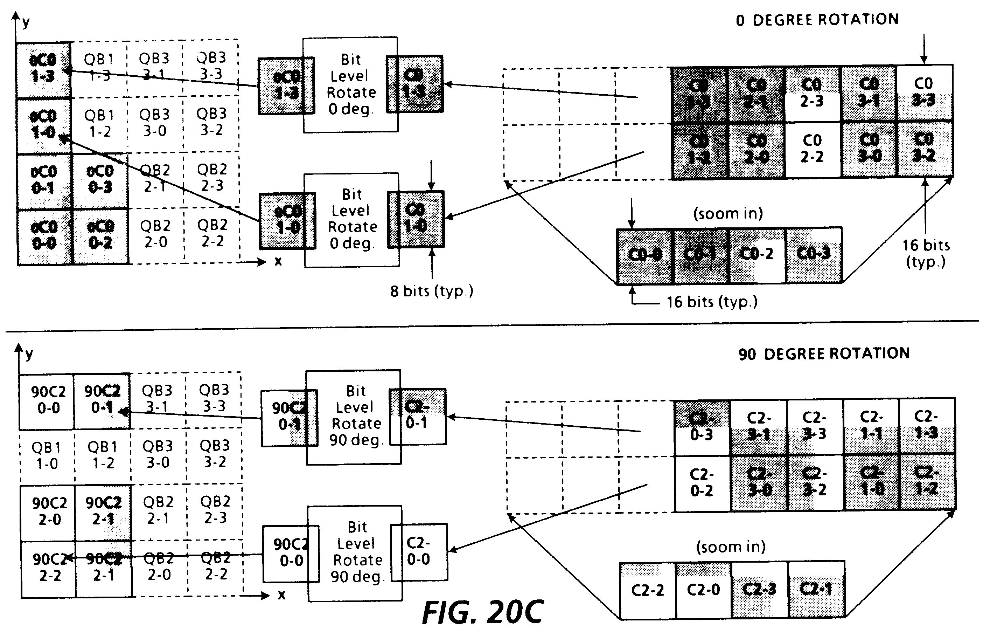

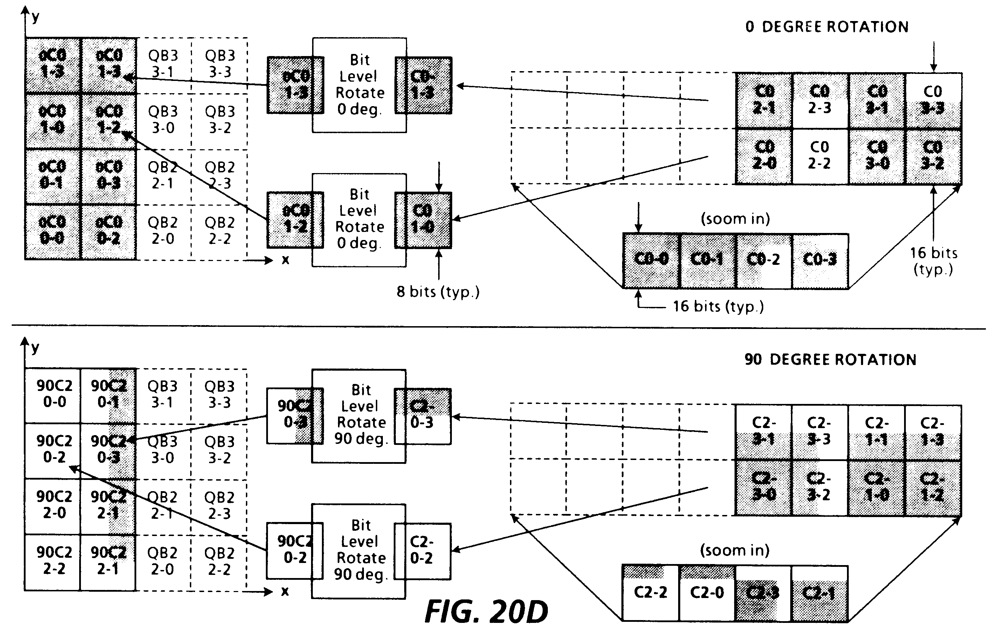

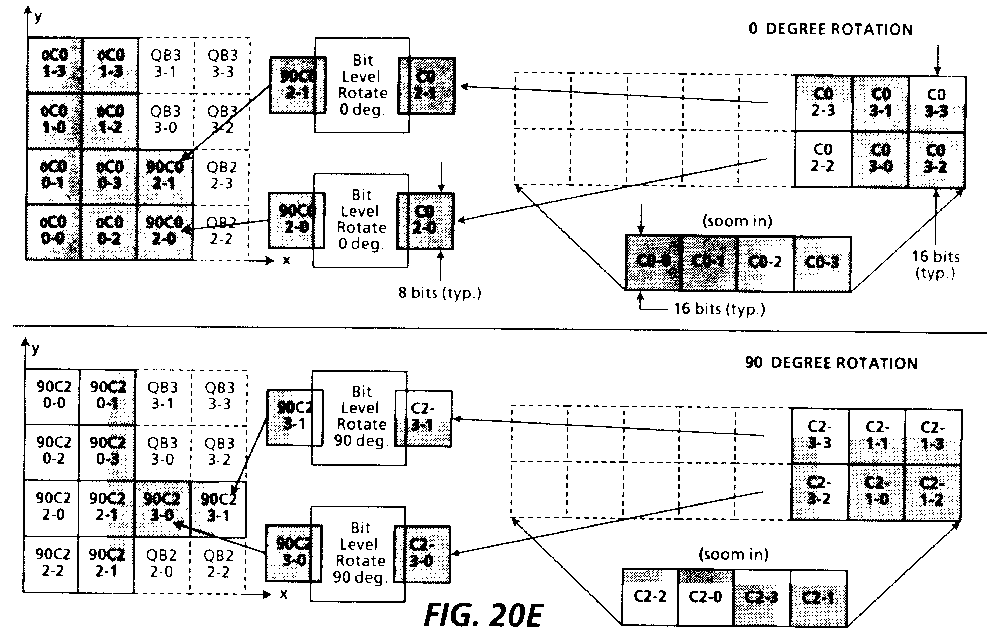

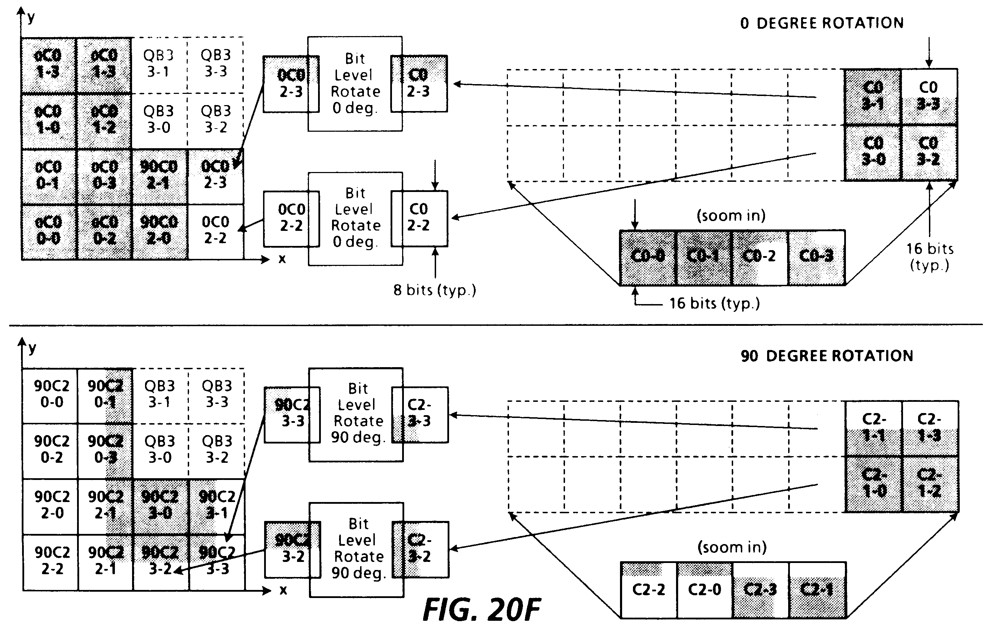

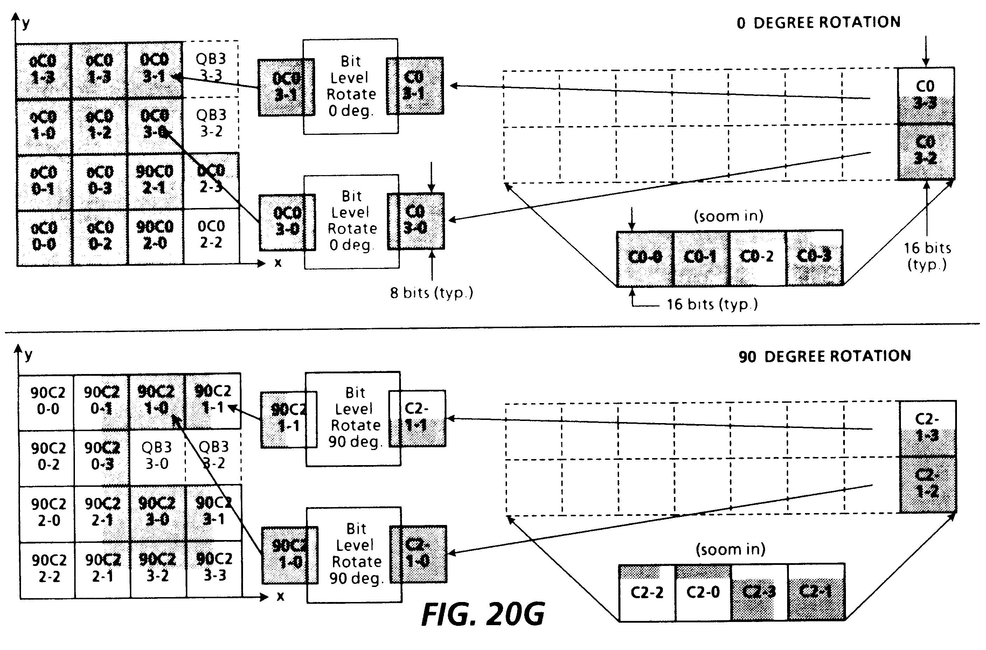

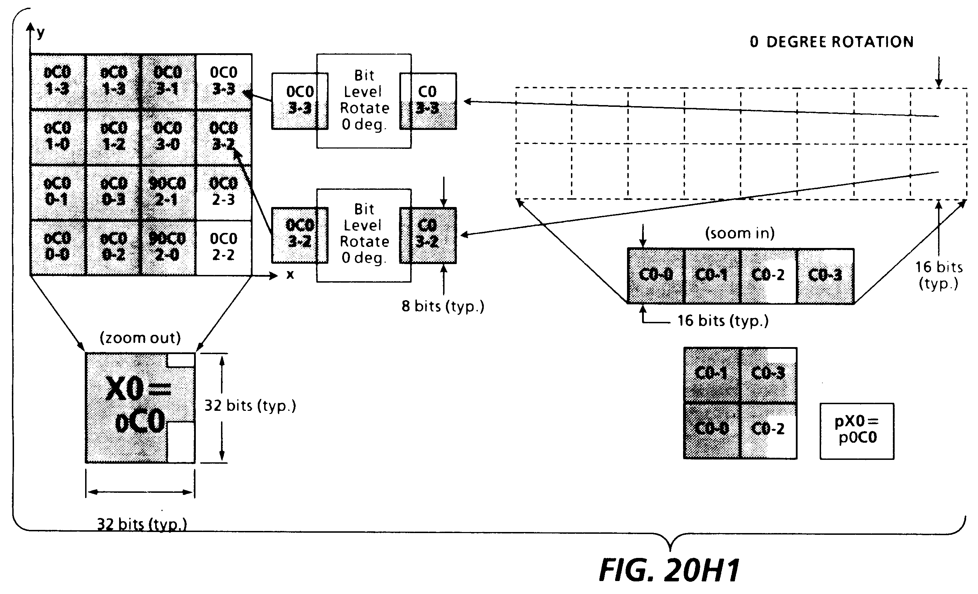

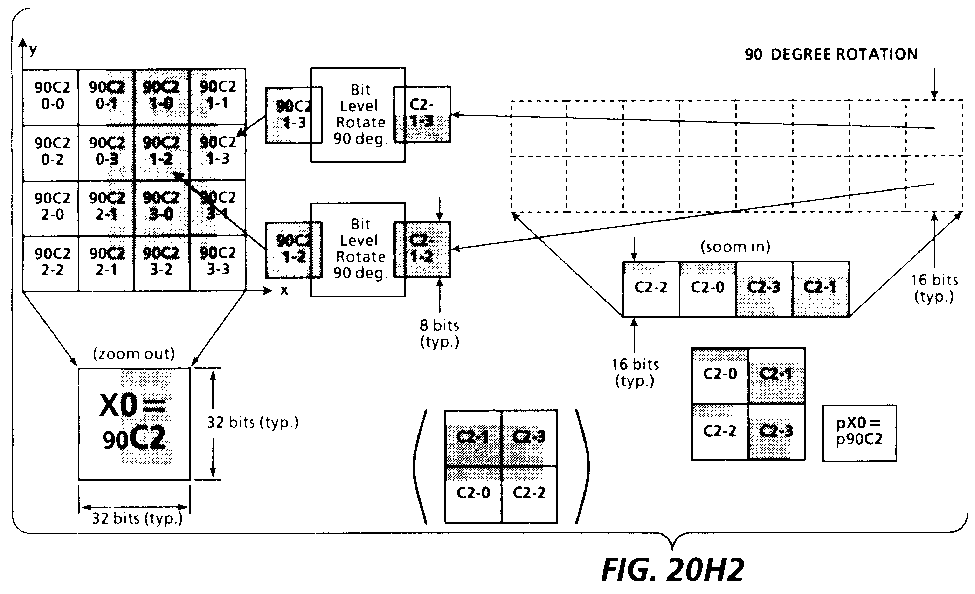

The details of moving quarter-blocks through the rotation logic into the block buffer are shown in Figures 20A - 20H. The qb stream is split into two byte streams which pass through bit rotator that store 8 bytes each. The output is then steered to the appropriate qqb within the active qb. The diagram shows pairs of qqb flowing through the rotator for two rotations, 0 for reference and 90 degrees. Only the first quarter-block of the example object is shown.

Detailed operation: two color block sequencing.

For two color processing there is twice as much data to be handled. The source data is represented as two equal sized scan-ordered rasters. The processor determines the page buffer starting location, calculates the parameters for the rotator, and initiates the object source data transfer. This is done for both bit separation rasters.

The rotator ASIC still delivers a block stream (twice as many blocks.) The processor then handles each block of the object (or fragments of large object) in cell band order, the same way for all orientations. The rotation logic imposes a 32 x 32 block size that is not otherwise a restriction on the processor BitBIT operation. For two color objects the 32 bits of a block provides only 16 2-bit pixels by 32 scans. The blocks are shown as rectangles, acknowledging this fact so the object is not distorted in the diagram.

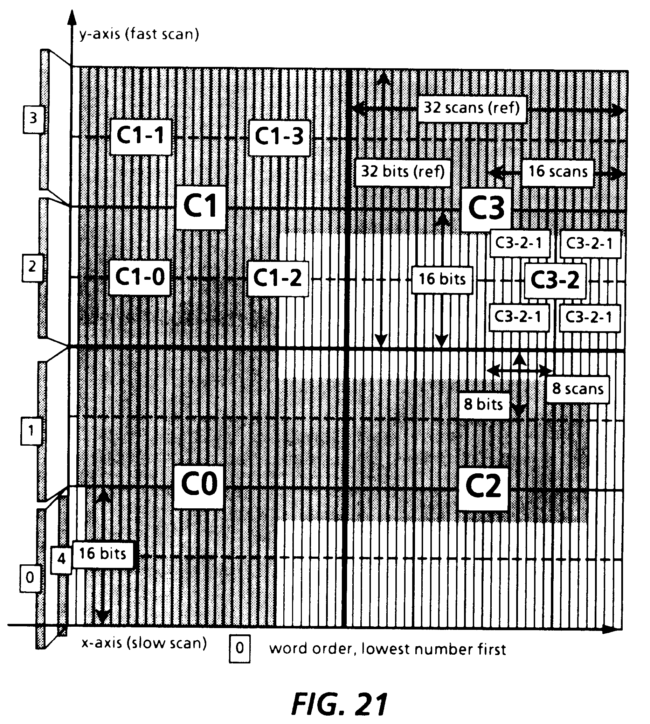

Figure 21 shows the example object as stored in memory, this is typical for both separations. The scan ordered source data stream sequence into VRAM (two bytes wide) is also shown. The labels attached to the data for the purpose of discussion are shown for various level of data grouping. The rotator ASIC accepts data alternately from the low bit and high bit band buffer, alternating every quarter-block.

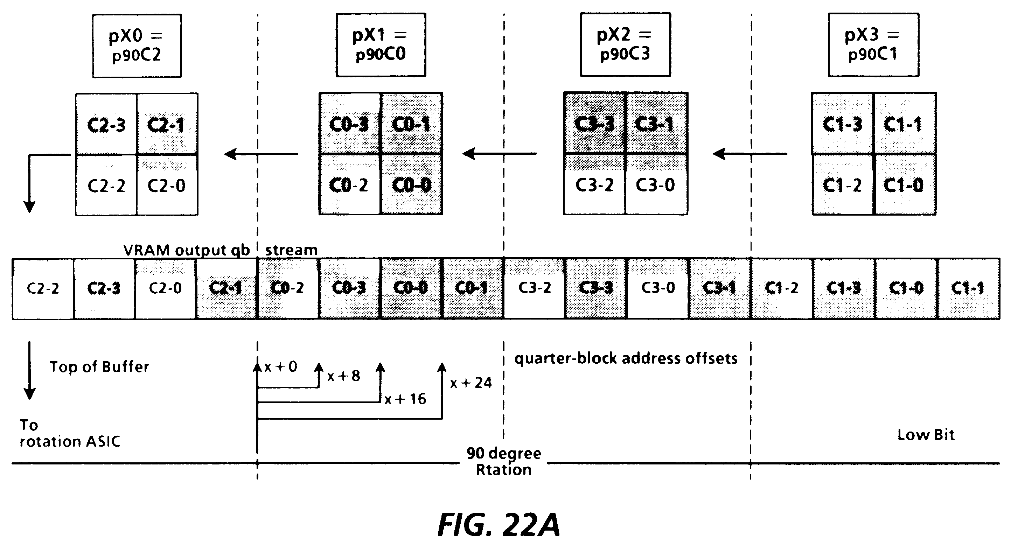

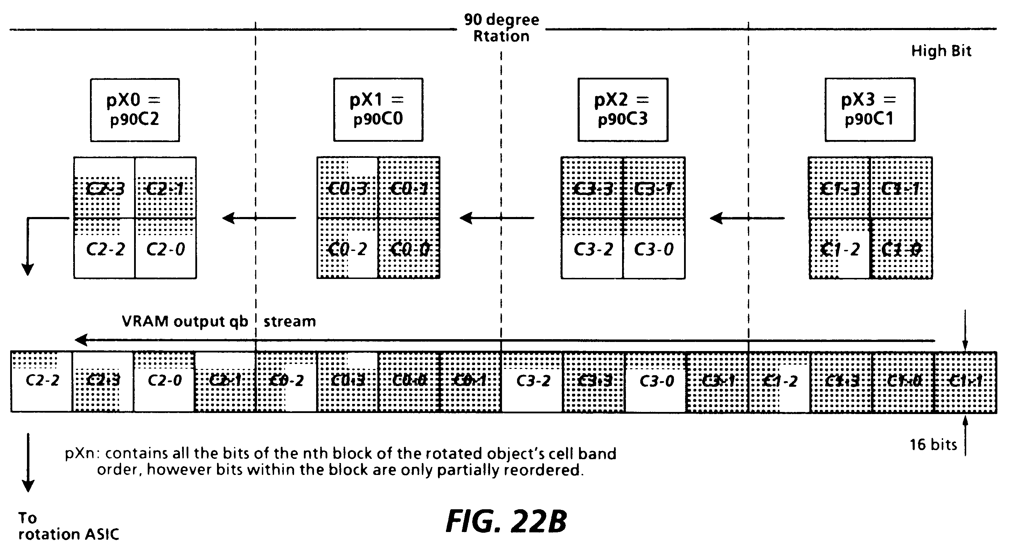

Figure 22 shows the example object in the band buffer with blocks and quarter blocks reordered for only 90 degree rotation. Note that the quarter-block order is different than 90 monochrome due to the packed pixel format of the output block stream

The output of the band buffer is still a 16 bit with stream. Each set of 16 doublebytes is a quarter-block, so the output may be thought of as a qb stream. However, since there are now two bits for each pixel there is a corresponding quarter-block for the high bit in the second band buffer. The rotator ASIC alternates every qb.

The order of quarter blocks with 64 doublebyte blocks is already permuted according to the desired rotation/reflection, so band buffer output may alternately be considered as a partially reordered block stream, as shown above the qb stream depicted in the figure. The block stream is reconstructed in cell band order with earliest = 0 and latest = 3.

Figures 23A to Hii. show the block sequence from rotator to the processor and into the page image for 90 degrees. In addition to showing four blocks from each bit separation for a total of eight packed pixel format blocks, the output is shown misaligned, so the extra cycle at the end of each cell band that writes out the remainder is shown

Detailed operation: two color quarter-block sequence, see Figures 24A to H.

As discussed at the block level the qb sequence in the VRAM band buffer is unique to two color operation. The distribution of quarter blocks into the block buffer is the same in that the first goes to QB0, then QB1, QB2, and QB3. However, since the source alternates between high and low bits the result is as shown earlier in table 6. This permits all of the corresponding bits from both separations to be presented to the bit interleaving logic for the creation of a single, packed pixel half-block from of the corresponding pair of quarterblocks.

Within the quarter-block, the qqb permutation is identical to the monochrome instance. Only the qb loading and bit interleave selection operate differently.

One block from each bit separation band buffer makes up two rotated blocks or two page image halfcells of sixteen two-bit pixels × 32 scans (see Figure 25).

| Source Order (0,1,2,3) Rotation: | One color QB order and all QQB order |
|---|---|
| 0 | (0,1,2,3) |
| 90 | (1,3,0,2) |
| 180 | (3,2,1,0) |
| 270 | (2,0,3,1) |
| R0 | (1,0,3,2) |
| R90 | (3,1,2,0) |
| R180 | (2,3,0,1) |
| R270 | (0,2,1,3) |

Table 1. Permutation of qb order for one color

| Source Order (0,1,2,3) Rotation: | Two color QB order |
|---|---|
| 0 | (0,2,1,3) |
| 90 | (2,3,0,1) |
| 180 | (3,1,2,0) |
| 270 | (1,0,3,2) |
| R0 | (2,0,3,1) |
| R90 | (3,2,1,0) |
| R180 | (1,3,0,2) |
| R270 | (0,1,2,3) |

Table 2. Permutation of qb order for two colors

| Rot. | FastBase Initial Value | SlowBase /BlockSize | FastStep /BlockSize | SlowStep /BlockSize |
|---|---|---|---|---|
| 0 | 0 | 0 | 1 | yBlock |
| 90 | 0 | xBlock-1 | xBlock | -1 |
| 180 | 0 | xBlock*yBlock-1 | -1 | -1*yBlock |
| 270 | 0 | xBlock*(yBlock-1) | -1*xBlock | 1 |
| R0 | 0 | yBlock-1 | -1 | yBlock |
| R90 | 0 | xBlock*yBlock-1 | -1*xBlock | -1 |
| R180 | 0 | yBlock*(xBlock-1) | 1 | -1*yBlock |
| R270 | 0 | 0 | xBlock | 1 |

Table 3.  Address generation parameters (blocksize typically 64 doublebytes)

| Source Order (0,1,2,3) Rotation: | All qqb order |
|---|---|
| 0 | (0,1,2,3) |
| 90 | (1,3,0,2) |
| 180 | (3,2,1,0) |
| 270 | (2,0,3,1) |
| R0 | (1,0,3,2) |
| R90 | (3,1,2,0) |
| R180 | (2,3,0,1) |
| R270 | (0,2,1,3) |

Table 4.  Permutation of qqb order

| VRAM QB Offset | One color Destination |
|---|---|
| 0 (earliest) | QB0 |
| 1 | QB1 |
| 2 | QB2 |
| 3 (latest) | QB3 |

Table 5. Data steering of qb from vram to block buffer

| VRAM QB Offset (low bit) | VRAM QB Offset (high bit) | Destination |
|---|---|---|
| 0 | n/a | QB0 |
| n/a | 0 | QB1 |
| 1 | n/a | QB2 |
| n/a | 1 | QB3 |
| 2 | n/a | QB0 |
| n/a | 2 | QB1 |
| 3 | n/a | QB2 |
| n/a | 3 | QB3 |

Table 6. Two color data steering of qb from VRAM to block buffer

**Claims**

1. A method of rotating an image comprising rotating the pixels within an xn by yn pixel block of data in a first memory means, where n, x and y are integers greater than 1, so that pixels originally aligned in the fast and slow scan directions are realigned in the slow and fast scan directions, respectively, the method comprising the steps of:

dividing said block into n by n pixel segments;

accessing each segment of data from said first memory, said accessing occurring segment by segment in one of the two directions;

storing each segment of data into a second memory in said segment's rotated position to store said segments originally aligned in said first memory in one direction to be aligned in said second memory in the other direction;

accessing each segment of data from its location in said second memory, rotating the pixels within each segment of data, said pixels originally aligned in one direction being rotated to be aligned in the other direction; and

storing said rotated pixels in a third memory.

2. A method as claimed in Claim 1, wherein each pixel has a number of bits.

3. A method as claimed in Claim 2, wherein said method is applied in parallel to said number of bits, each image comprising a bit separation of the bits of said pixels, the corresponding bits of each pixel being stored together into separate rasters until corresponding rotated blocks from each separation are completely rotated and then merged into a single rotated block of packed pixels.

4. A method of rotating an original image of pixels in a form of raster scan lines comprising:
   segmenting each of said scan lines into segments having a plurality of pixels,
   determining a memory location where each of said segments must be stored to divide a resultant image into square blocks having said plurality of pixels in each direction, wherein said blocks are rotated, but said pixels within said blocks are not rotated,
   loading each of said segments into said determined locations, and
   rotating the pixels within each block after all segments are loaded into said block.

5. The method of Claim 4, wherein each pixel has a number of bits.

6. A method of rotating an original image of pixels in a form of raster scan lines wherein all pixels have an integer number, greater than one, of bits, comprising:
   separating each scan line into said number of parallel scan lines, each having pixels of one bit,
   segmenting each parallel scan line into segments having a plurality of pixels,
   determining a memory location where each of said segments must be stored to divide the resultant image into square blocks having a plurality of pixels in each direction, said blocks being rotated, but the pixels within said blocks not being rotated,
   loading each of said segments in said determined location,
   rotating the pixels within each block after all segments are loaded into said block, and
   combining said number of blocks of one bit pixels into one block having pixels comprising said number of bits.

later scanned pixel

y-axis, fast scan

"strip" = page length words

Increasing
Word
Address

A

A + 1

Earlier Scan

Later Scan

next
address

x-axis, slow scan

Page image base
memory address

earlier
scanned
pixel

*FIG. 1*

EP 0 609 622 A1

*FIG. 2*

FIG. 3

Block Rotator ASIC

Processor

Rotated Block Stream

INTERLEAVE

Block Buffer

E:

8 x 8 qb rotate

8 x 8 qb rotate

D:

C:

Address Generation & Control

Address Generation & Control

8

8

16

B:

Memory

Interface to memory and/or DMA control

Req / Ack

Address

Decompressor

Data

A:

16

Band Buffer (VRAM)

Band Buffer (VRAM)

Address

Req / Ack

A:

Data

16

Decompressor

**FIG. 4**

C1 C3

C0 C2

C0 C1

C2 C3

C0-0 C0-3    C1-0 C1-3

C0-1 C0-2    C1-1 C1-2

C2-0 C2-3    C3-0 C3-3

C2-0 C2-2    C3-0 C3-2

y

Scan order

64 scatter write
operations per block

x

=

p90C0

C0-0 C0-1    C1-0 C1-1

C0-2 C0-3    C1-2 C1-3

p90C1

C2-0 C2-1    C3-0 C3-1

C2-2 C2-3    C3-2 C3-3

p90C2                    p90C3

**FIG. 5A**

To & From Fig. 5B

FIG. 5B

Input to Bit rotation

16 bits

| C2-2-1 | C2-2-3 |
| C2-2-0 | C2-2-2 |

To & From Fig. 5A

Bit rotation

Output of Bit rotation

| 90C2 2-1 | 90C2 2-3 |
| 90C2 2-0 | 90C2 2-2 |

qqb reorder by data steering

| 90C2 2-1 | 90C2 2-3 |
| 90C2 2-0 | 90C2 2-2 |

=

Rotated Block Buffer

| QB-1 1-1 | QB-1 1-3 | QB-3 3-1 | QB-3 3-3 |
| QB-1 1-0 | QB-1 1-2 | QB-3 3-0 | QB-3 3-2 |
| 90C2 2-0 | 90C2 2-1 | QB-2 2-1 | QB-2 2-3 |
| 90C2 2-2 | 90C2 2-3 | QB-2 2-0 | QB-2 2-2 |

8

x

y

FIG. 6

**Parameter Loading Bus**

FastInit

2:1 Mux

SlowBase | SlowStep

FastBase | FastStep

14 bit adder

14 bit adder

14 bit adder

14

Mode
qbi
ROT

qbindex
Permutation
Rom / Eq'n

ScanCounter

SC3:0

4

2

ROTqbi 1:0

20 bit Word Address

to VRAM

**FIG. 7**

FIG. 8A

Interleave bits when enabled

Pass bits when enabled

To Processor

REGISTER

QB1-3 | QB3-3
QB1-2 | QB3-2
QB1-1 | QB3-1
QB1-0 | QB3-0

QB0-3 | QB2-3
QB0-2 | QB2-2
QB0-1 | QB2-1
QB0-0 | QB2-0

Read Address / Select

Write Address / Select

To Fig. 8B

Alternate buffer

Rotate (8x8)

Rotate (8x8)

2:1 multipleser, byte wide (typical)

Alternate buffer

Rotate (8x8)

Rotate (8x8)

16

From band buffer

Paraller rotating qqb buffers (double buffered)

EP 0 609 622 A1

To Fig. 8A

| | |
|---|---|
| QB1 -3 | QB3 -3 |

| | |
|---|---|
| QB1 -2 | QB3 -2 |

| | |
|---|---|
| QB1 -1 | QB3 -1 |

| | |
|---|---|
| QB1 -0 | QB3 -0 |

| | |
|---|---|
| QB0 -3 | QB2 -3 |

| | |
|---|---|
| QB0 -2 | QB2 -2 |

| | |
|---|---|
| QB0 -1 | QB2 -1 |

| | |
|---|---|
| QB0 -0 | QB2 -0 |

FIG. 8B

| | | | |
|---|---|---|---|
| QB1-1.7 | QB1-3.7 | QB3-1.7 | QB3-3.7 |
| QB1-1.6 | QB1-3.6 | QB3-1.6 | QB3-3.6 |
| QB1-1.5 | QB1-3.5 | QB3-1.5 | QB3-3.5 |
| QB1-1.4 | QB1-3.4 | QB3-1.4 | QB3-3.4 |
| QB1-1.3 | QB1-3.3 | QB3-1.3 | QB3-3.3 |
| QB1-1.2 | QB1-3.2 | QB3-1.2 | QB3-3.2 |
| QB1-1.1 | QB1-3.1 | QB3-1.1 | QB3-3.1 |
| QB1-1.0 | QB1-3.0 | QB3-1.0 | QB3-3.0 |
| QB1-0.7 | QB1-2.7 | QB3-0.7 | QB3-2.7 |
| QB1-0.6 | QB1-2.6 | QB3-0.6 | QB3-2.6 |
| QB1-0.5 | QB1-2.5 | QB3-0.5 | QB3-2.5 |
| QB1-0.4 | QB1-2.4 | QB3-0.4 | QB3-2.4 |
| QB1-0.3 | QB1-2.3 | QB3-0.3 | QB3-2.3 |
| QB1-0.2 | QB1-2.2 | QB3-0.2 | QB3-2.2 |
| QB1-0.1 | QB1-2.1 | QB3-0.1 | QB3-2.1 |
| QB1-0.0 | QB1-2.0 | QB3-0.0 | QB3-2.0 |
| QB0-1.7 | QB0-3.7 | QB2-1.7 | QB2-3.7 |
| QB0-1.6 | QB0-3.6 | QB2-1.6 | QB2-3.6 |
| QB0-1.5 | QB0-3.5 | QB2-1.5 | QB2-3.5 |
| QB0-1.4 | QB0-3.4 | QB2-1.4 | Q20-3.4 |
| QB0-1.3 | QB0-3.3 | QB2-1.3 | QB2-3.3 |
| QB0-1.2 | QB0-3.2 | QB2-1.2 | QB2-3.2 |
| QB0-1.1 | QB0-3.1 | QB2-1.1 | QB2-3.1 |
| QB0-1.0 | QB0-3.0 | QB2-1.0 | QB2-3.0 |
| QB0-0.7 | QB0-2.7 | QB2-0.7 | QB2-2.7 |
| QB0-0.6 | QB0-2.6 | QB2-0.6 | QB2-2.6 |
| QB0-0.5 | QB0-2.5 | QB2-0.5 | QB2-2.5 |
| QB0-0.4 | QB0-2.4 | QB2-0.4 | QB2-2.4 |
| QB0-0.3 | QB0-2.3 | QB2-0.3 | QB2-2.3 |
| QB0-0.2 | QB0-2.2 | QB2-0.2 | QB2-2.2 |
| QB0-0.1 | QB0-2.1 | QB2-0.1 | QB2-2.1 |
| QB0-0.0 | QB0-2.0 | QB2-0.0 | QB2-2.0 |

31

0

*FIG. 9A*

| QB1-1.7 | QB1-3.7 | QB3-1.7 | QB3-3.7 |
| QB0-1.7 | QB0-3.7 | QB2-1.7 | QB2-3.7 |
| QB1-1.6 | QB1-3.6 | QB3-1.6 | QB3-3.6 |
| QB0-1.6 | QB0-3.6 | QB2-1.6 | QB2-3.6 |
| QB1-1.5 | QB1-3.5 | QB3-1.5 | QB3-3.5 |
| QB0-1.5 | QB0-3.5 | QB2-1.5 | QB2-3.5 |
| QB1-1.4 | QB1-3.4 | QB3-1.4 | QB3-3.4 |
| QB0-1.4 | QB0-3.4 | QB2-1.4 | Q20-3.4 |
| QB1-1.3 | QB1-3.3 | QB3-1.3 | QB3-3.3 |
| QB0-1.3 | QB0-3.3 | QB2-1.3 | QB2-3.3 |
| QB1-1.2 | QB1-3.2 | QB3-1.2 | QB3-3.2 |
| QB0-1.2 | QB0-3.2 | QB2-1.2 | QB2-3.2 |
| QB1-1.1 | QB1-3.1 | QB3-1.1 | QB3-3.1 |
| QB0-1.1 | QB0-3.1 | QB2-1.1 | QB2-3.1 |
| QB1-1.0 | QB1-3.0 | QB3-1.0 | QB3-3.0 |
| QB0-1.0 | QB0-3.0 | QB2-1.0 | QB2-3.0 |

| QB1-0.7 | QB1-2.7 | QB3-0.7 | QB3-2.7 |
| QB0-0.7 | QB0-2.7 | QB2-0.7 | QB2-2.7 |
| QB1-0.6 | QB1-2.6 | QB3-0.6 | QB3-2.6 |
| QB0-0.6 | QB0-2.6 | QB2-0.6 | QB2-2.6 |
| QB1-0.5 | QB1-2.5 | QB3-0.5 | QB3-2.5 |
| QB0-0.5 | QB0-2.5 | QB2-0.5 | QB2-2.5 |
| QB1-0.4 | QB1-2.4 | QB3-0.4 | QB3-2.4 |
| QB0-0.4 | QB0-2.4 | QB2-0.4 | QB2-2.4 |
| QB1-0.3 | QB1-2.3 | QB3-0.3 | QB3-2.3 |
| QB0-0.3 | QB0-2.3 | QB2-0.3 | QB2-2.3 |
| QB1-0.2 | QB1-2.2 | QB3-0.2 | QB3-2.2 |
| QB0-0.2 | QB0-2.2 | QB2-0.2 | QB2-2.2 |
| QB1-0.1 | QB1-2.1 | QB3-0.1 | QB3-2.1 |
| QB0-0.1 | QB0-2.1 | QB2-0.1 | QB2-2.1 |
| QB1-0.0 | QB1-2.0 | QB3-0.0 | QB3-2.0 |
| QB0-0.0 | QB0-2.0 | QB2-0.0 | QB2-2.0 |

*FIG. 9B*

Write Bit 3
Write Bit 2
Write Bit 1
Write Bit 0

Write Row 0

Write Row 1

Write Row 2

Write Row 3

Typical for Common
Input / Output

Write Bit n

Typical for Separate
Input / Output

InBit n

WriteBit n

Bit n

**FIG. 10**

FIG. 11A

To & From Fig. 11B

FIG. 11B

EP 0 609 622 A1

Entry address and bit order =
Stored Address and bit order

**Column Word or Row Bit Order:**

|  | 0 | 1 | 2 | 3 |  |
|---|---|---|---|---|---|
| Write Word 0 | 0 | 1 | 2 | 3 | Column Bit 0 or Row Word 0 |
| Write Word 1 | 4 | 5 | 6 | 7 | Column Bit 1 or Row Word 1 |
| Write Word 2 | 8 | 9 | 10 | 11 | Column Bit 2 or Row Word 2 |
| Write Word 3 | 12 | 13 | 14 | 15 | Column Bit 3 or Row Word 3 $(2^n-1)$ |

**Stored Format**

**Read Format**

**Read Bit Order:**

|  | 0 | 1 | 2 | 3 |
|---|---|---|---|---|
| Word0 | 0 | 1 | 2 | 3 |
| Word1 | 4 | 5 | 6 | 7 |
| Word2 | 8 | 9 | 10 | 11 |
| Word3 | 12 | 13 | 14 | 15 |

Read Address — Row Normal
Bit Normal
*Rotate 0 degrees*

| 3 | 2 | 1 | 0 |
|---|---|---|---|
| 7 | 6 | 5 | 4 |
| 11 | 10 | 9 | 8 |
| 15 | 14 | 13 | 12 |

Read Address — Row Normal
Bit Reversed
*Rotate 0 degrees and reflect*

| 15 | 14 | 13 | 12 |
|---|---|---|---|
| 11 | 10 | 9 | 8 |
| 7 | 6 | 5 | 4 |
| 3 | 2 | 1 | 0 |

Read Address — Row Inverted
Bit Reversed
*Rotate 180 degrees*

| 12 | 13 | 14 | 15 |
|---|---|---|---|
| 8 | 9 | 10 | 11 |
| 4 | 5 | 6 | 7 |
| 0 | 1 | 2 | 3 |

Read Address — Row Inverted
Bit Normal
*Rotate 180 degrees and reflect*

## FIG. 12A

|       |    |    |   |   |
|-------|----|----|---|---|
| Word0 | 12 |  8 | 4 | 0 |
| Word1 | 13 |  9 | 5 | 1 |
| Word2 | 14 | 10 | 6 | 2 |
| Word3 | 15 | 11 | 7 | 3 |

Read Address Bit — Column Normal Reversed
*Rotate 90 degrees*

|    |    |   |   |
|----|----|---|---|
| 15 | 11 | 7 | 3 |
| 14 | 10 | 6 | 2 |
| 13 |  9 | 5 | 1 |
| 12 |  8 | 4 | 0 |

Read Address Bit — Column Inverted Reversed
*Rotate 90 degrees and reflect*

|   |   |    |    |
|---|---|----|----|
| 3 | 7 | 11 | 15 |
| 2 | 6 | 10 | 14 |
| 1 | 5 |  9 | 13 |
| 0 | 4 |  8 | 12 |

Read Address Bit — Column Inverted Normal
*Rotate 270 degrees and reflect*

|   |   |    |    |
|---|---|----|----|
| 0 | 4 |  8 | 12 |
| 1 | 5 |  9 | 13 |
| 2 | 6 | 10 | 14 |
| 3 | 7 | 11 | 15 |

Read Address Bit — Column Normal Normal
*Rotate 270 degrees and reflect*

## FIG. 12B

EP 0 609 622 A1

**FIG. 13**

RowBit 3

RowBit 2

RowBit 1

RowBit 0

WriteRow 0
Column Bit 0

WriteRow 1
Column Bit 1

WriteRow 2
Column Bit 2

WriteRow 3
Column Bit 3

WriteColumn 0

WriteColumn 1

WriteColumn 2

WriteColumn 3

Reverse and select

InBit n ▷ WriteBit n

WriteColumn transfers column bits to storage cells in column 'n'
WriteRow transfers row bits to storage cells in row 'n'

## FIG. 14

**FIG. 15**

Column Word or
Row Bit Order:

Bits are named in orginal data order (the same order as for no rotation). Bits are reversed and written into columns or rows as required

| | 0 | 1 | 2 | 3 |
|---|---|---|---|---|
| Word0 | 0 | 1 | 2 | 3 |
| Word1 | 4 | 5 | 6 | 7 |
| Word2 | 8 | 9 | 10 | 11 |
| Word3 | 12 | 13 | 14 | 15 |

Rotate 0 degrees-
Write: Row
Address: Normal
Bit: Normal

| 3 | 2 | 1 | 0 |
|---|---|---|---|
| 7 | 6 | 5 | 4 |
| 11 | 10 | 9 | 8 |
| 15 | 14 | 13 | 12 |

Rotate 0 degrees and reflect -
Write: Row
Address: Normal
Bit: Reversed

| 15 | 14 | 13 | 12 |
|---|---|---|---|
| 11 | 10 | 9 | 8 |
| 7 | 6 | 5 | 4 |
| 3 | 2 | 1 | 0 |

Rotate 180 degrees-
Write: Row
Address: Inverted
Bit: Reversed

| 12 | 13 | 14 | 15 |
|---|---|---|---|
| 8 | 9 | 10 | 11 |
| 4 | 5 | 6 | 7 |
| 0 | 1 | 2 | 3 |

Rotate 180 degrees and reflect -
Write: Row
Address: Inverted
Bit: Normal

| | 0 | 1 | 2 | 3 |
|---|---|---|---|---|
| Word0 | 12 | 8 | 4 | 0 |
| Word1 | 13 | 9 | 5 | 1 |
| Word2 | 14 | 10 | 6 | 2 |
| Word3 | 15 | 11 | 7 | 3 |

Rotate 90 degrees-
Write: Column
Address: Normal
Bit: Reversed

| 15 | 11 | 7 | 3 |
|---|---|---|---|
| 14 | 10 | 6 | 2 |
| 13 | 9 | 5 | 1 |
| 12 | 8 | 4 | 0 |

Rotate 90 degrees and reflect-
Write: Column
Address: Inverted
Bit: Reversed

| 3 | 7 | 11 | 15 |
|---|---|---|---|
| 2 | 6 | 10 | 14 |
| 1 | 5 | 9 | 13 |
| 0 | 4 | 8 | 12 |

Rotate 270 degrees and reflect-
Write: Column
Address: Inverted
Bit: Normal

| 0 | 4 | 8 | 12 |
|---|---|---|---|
| 1 | 5 | 9 | 13 |
| 2 | 6 | 10 | 14 |
| 3 | 7 | 11 | 15 |

Rotate 270 degrees and reflect-
Write: Column
Address: Normal
Bit: Normal

## FIG. 16A

EP 0 609 622 A1

**Read Word**

Read Bit Order:

|  | 0 | 1 | 2 | 3 |
|---|---|---|---|---|
| 0 | x | x | x | x |
| 1 | x | x | x | x |
| 2 | x | x | x | x |
| 3 ($2^n$-1) | x | x | x | x |

ROW Read address and bit order =
Stored Address and bit order

First (column) word written for
Rotate 90 degrees and reflect

|  | 0 | 1 | 2 | 3 |
|---|---|---|---|---|
| Column Bit 0 or Row Word 0 | 15 | 11 | 7 | 3 |
| Column Bit 1 or Row Word 1 | 14 | 10 | 6 | 2 |
| Column Bit 2 or Row Word 2 | 13 | 9 | 5 | 1 |
| Column Bit 3 or Row Word 3 | 12 | 8 | 4 | 0 |

## FIG. 16B

FIG. 17

| pX0 = p0C0 | pX1 = p0C1 | 0 degree Rtation | pX2 = p0C2 | pX3 = p0C3 |

| C0-1 | C0-3 |
| C0-0 | C0-2 |

| C1-1 | C1-3 |
| C1-0 | C1-2 |

| C2-1 | C2-3 |
| C2-0 | C2-2 |

| C3-1 | C3-3 |
| C3-0 | C3-2 |

VRAM output qb stream

| C0-0 | C0-1 | C0-2 | C0-3 | C1-0 | C1-1 | C1-2 | C1-3 | C2-0 | C2-1 | C2-2 | C2-3 | C3-0 | C3-1 | C3-2 | C3-3 |

Top of Buffer

x+0  x+8  x+16  x+24

quarter-block address offsets

To rotation ASIC

**FIG. 18A**

EP 0 609 622 A1

pX0 =
p90C2

Equivalent
partially
reordered
block stream

pX1 =
p90C0

90 degree
Rtation

pX2 =
p90C3

pX3 =
p90C1

| C2-0 | C2-1 |
|------|------|
| C2-2 | C2-3 |

| C0-0 | C0-1 |
|------|------|
| C0-2 | C0-3 |

| C3-0 | C3-1 |
|------|------|
| C3-2 | C3-3 |

| C1-0 | C1-1 |
|------|------|
| C1-2 | C1-3 |

VRAM output qb stream to rotation ASIC

| C2-2 | C2-0 | C2-3 | C2-1 | C0-2 | C0-0 | C0-3 | C0-1 | C3-2 | C3-0 | C3-3 | C3-1 | C1-2 | C1-0 | C1-3 | C1-1 |

pXn: contains all the bits of the nth block of the retated object's cell band
order, however bits within the block are only partially reordered.

16 bits

To
rotation ASIC

*FIG. 18B*

**0 DEGREE ROTATION: rotated block stream from rotator**

Processor ← X0

X1 = 0C1   X2 = 0C2   X3 = 0C3

X1   X3

X0 = 0C0   X2

Rotated object in Page Image Memory

Notice that although the bit order appears the same, the word order from the source has altered significantly. The first block sent to the processor (X0) contains the following 64 doublebytes (numbered in source scan order):

0,1; 4,5; 8,9; 12.13; 16,17; ... 124,125.

**90 DEGREE ROTATION: rotated block stream from rotator**

Processor ← X0

X1 = 90C1   X2 = 90C3   X3 = 90C1

X1   X3

X2 = 90C2   X2

Rotated object in Page Image Memory

## FIG. 19A

**0 DEGREE ROTATION: rotated block stream from rotator**

Processor

X0

X1

X2 = 0C2

X3 = 0C3

Rotated object in Page Image Memory

X1 = 0C1

X3

X0 = 0C0

X2

Notice that although the bit order appears the same, the word order from the source has altered significantly. The first block sent to the processor (X0) contains the following 64 doublebytes (numbered in source scan order):

0,1; 4,5; 8,9; 12.13; 16,17; ... 124,125.

**90 DEGREE ROTATION: rotated block stream from rotator**

Processor

X0

X1

X2 = 90C3

X3 = 90C1

Rotated object in Page Image Memory

X1 = 90C1

X3

X2 = 90C2

X2

**FIG. 19B**

**0 DEGREE ROTATION: rotated block stream from rotator**

Processor

| X0 | X1 | X2 | **X3 =** 0C3 |

Rotated object in Page Image Memory

| **X1 =** 0C1 | X3 |
| **X0 =** 0C0 | **X2 =** 0C2 |

Notice that although the bit order appears the same, the word order from the source has altered significantly. The first block sent to the processor (X0) contains the following 64 doublebytes (numbered in source scan order):

0,1; 4,5; 8,9; 12.13; 16,17; ... 124,125.

**90 DEGREE ROTATION: rotated block stream from rotator**

Processor

| X0 | X1 | X2 | **X3 =** 90C1 |

Rotated object in Page Image Memory

| **X1 =** 90C1 | X3 |
| **X2 =** 90C2 | **X2 =** 90C3 |

*FIG. 19C*

**0 DEGREE ROTATION: rotated block stream from rotator**

Processor ← | X0 | X1 | X2 | X3 |

Rotated object in Page Image Memory

| X1 = 0C1 | X3 = 0C2 |
| X0 = 0C0 | X2 = 0C2 |

Notice that although the bit order appears the same, the word order from the source has altered significantly. The first block sent to the processor (X0) contains the following 64 doublebytes (numbered in source scan order):

0,1; 4,5; 8,9; 12.13; 16,17; ... 124,125.

**90 DEGREE ROTATION: rotated block stream from rotator**

Processor ← | X0 | X1 | X2 | X3 |

Rotated object in Page Image Memory

| X1 = 90C1 | X3 = 90C1 |
| X0 = 90C2 | X2 = 90C3 |

## FIG. 19D

*FIG. 20A*

EP 0 609 622 A1

**FIG. 20B**

FIG. 20C

EP 0 609 622 A1

FIG. 20D

0 DEGREE ROTATION

90 DEGREE ROTATION

16 bits (typ.)

8 bits (typ.)

16 bits (typ.)

(soom in)

Bit Level Rotate 0 deg.

Bit Level Rotate 90 deg.

EP 0 609 622 A1

FIG. 20E

0 DEGREE ROTATION

90 DEGREE ROTATION

EP 0 609 622 A1

0 DEGREE ROTATION

90 DEGREE ROTATION

FIG. 20F

0 DEGREE ROTATION

90 DEGREE ROTATION

FIG. 20G

FIG. 20H1

FIG. 20H2

EP 0 609 622 A1

FIG. 21

EP 0 609 622 A1

pX0 =
p90C2

pX1 =
p90C0

pX2 =
p90C3

pX3 =
p90C1

| C2-3 | C2-1 |
| C2-2 | C2-0 |

| C0-3 | C0-1 |
| C0-2 | C0-0 |

| C3-3 | C3-1 |
| C3-2 | C3-0 |

| C1-3 | C1-1 |
| C1-2 | C1-0 |

VRAM output qb stream

| C2-2 | C2-3 | C2-0 | C2-1 | C0-2 | C0-3 | C0-0 | C0-1 | C3-2 | C3-3 | C3-0 | C3-1 | C1-2 | C1-3 | C1-0 | C1-1 |

Top of Buffer

quarter-block address offsets

x + 0
x + 8
x + 16
x + 24

To
rotation ASIC

Low Bit

90 degree
Rtation

**FIG. 22A**

54

**90 degree Rtation**

High Bit

| pX0 = p90C2 | pX1 = p90C0 | pX2 = p90C3 | pX3 = p90C1 |

| C2-3 | C2-1 | C0-3 | C0-1 | C3-3 | C3-1 | C1-3 | C1-1 |
| C2-2 | C2-0 | C0-2 | C0-0 | C3-2 | C3-0 | C1-2 | C1-0 |

← ← ←

**VRAM output qb stream**

←

| C2-2 | C2-3 | C2-0 | C2-1 | C0-2 | C0-3 | C0-0 | C0-1 | C3-2 | C3-3 | C3-0 | C3-1 | C1-2 | C1-3 | C1-0 | C1-1 |

16 bits

pXn: contains all the bits of the nth block of the rotated object's cell band order, however bits within the block are only partially reordered.

To rotation ASIC

## FIG. 22B

X1 =
90C2h

X2 =
90C2l

**Processor**
(Align, then store
into page image memory)

X2 =
90C0l

X3 =
90C0h

X4 =
90C3l

X5 =
90C3h

X6 =
90C1l

X2 =
90C2l

X7 =
90C1h

## FIG. 23A

**FIG. 23B**

**Processor**
(Align, then store
into page image memory)

X1 =
90C2h

X2 =
90C0l

X3 =
90C0h

X4 =
90C3l

X5 =
90C3h

X6 =
90C1l

X7 =
90C1h

X2 =
90C0l

X1 =
90C2h

X2 =
90C2l

# FIG. 23C

58

**FIG. 23D**

X3 =
90C0h

**Processor**
(Align, then store
into page image memory)

X3 =
90C0h

X2 =
90C0l

X1 =
90C2h

X2 =
90C2l

X4 =
90C3l

X5 =
90C3h

X6 =
90C1l

X7 =
90C1h

*FIG. 23E*

**FIG. 23F**

61

X5 =
90C3h

X4 =
90C3l

**Processor**
(Align, then store
into page image memory)

X3 =
90C0h

X2 =
90C0l

X1 =
90C2h

X5 =
90C3h

X2 =
90C2l

X4 =
90C3l

X6 =
90C1l

X7 =
90C1h

**FIG. 23Gi**

## FIG. 23Gii

FIG. 23Hi

*FIG. 23Hii*

FIG. 24A

EP 0 609 622 A1

**FIG. 24B**

*FIG. 24C*

FIG. 24D

**FIG. 24E**

EP 0 609 622 A1

Low Bit

High Bit

**FIG. 24F**

**FIG. 24G**

90C2 2-0 | 90C2 2-1 | 90C2 3-0 | 90C2 3-1
90C2 2-2 | 90C2 2-3 | 90C2 3-2 | 90C2 3-3
90C2 2-0 | 90C2 2-1 | 90C2 3-0 | 90C2 3-1
90C2 2-2 | 90C2 2-3 | 90C2 3-2 | 90C2 3-3

y
x

90C2 3-3

Bit Level Rotate 90 deg.

C2-3-3

90C2 3-2

Bit Level Rotate 90 deg.

C2-3-2

Low Bit

High Bit

C2-0-1 | C2-0-3 | C2-1-3 | C2-1-1
C2-0-0 | C2-0-2 | C2-1-2 | C2-1-0

C2-0-1 | C2-0-3 | C2-1-3 | C2-1-1
C2-0-0 | C2-0-2 | C2-1-2 | C2-1-0

**FIG. 24H**

EP 0 609 622 A1

Bit Interleave

| 90C2 2-0 and 90C2 2-0 | 90C2 2-1 and 90C2 2-1 | 90C2 3-0 and 90C2 3-0 | 90C2 3-1 and 90C2 3-1 |
|---|---|---|---|
| 90C2 2-0 and 90C2 2-2 | 90C2 2-1 and 90C2 2-3 | 90C2 3-0 and 90C2 3-2 | 90C2 3-1 and 90C2 3-3 |

| 90C2 0-0 and 90C2 0-0 | 90C2 2-1 and 90C2 2-1 | 90C2 1-0 and 90C2 1-0 | 90C2 1-1 and 90C2 1-1 |
|---|---|---|---|
| 90C2 0-2 and 90C2 0-2 | 90C2 0-3 and 90C2 0-3 | 90C2 1-2 and 90C2 1-2 | 90C2 1-3 and 90C2 1-3 |

| 90C2 2-0 | 90C2 2-1 | 90C2 3-0 | 90C2 3-1 |
|---|---|---|---|
| 90C2 2-2 | 90C2 2-3 | 90C2 3-2 | 90C2 3-3 |

| 90C2 2-0 | 90C2 2-1 | 90C2 3-0 | 90C2 3-1 |
|---|---|---|---|
| 90C2 2-2 | 90C2 2-3 | 90C2 3-2 | 90C2 3-3 |

| 90C2 0-0 | 90C2 0-1 | 90C2 1-0 | 90C2 1-1 |
|---|---|---|---|
| 90C2 0-2 | 90C2 0-3 | 90C2 1-2 | 90C2 1-3 |

| 90C2 0-0 | 90C2 0-1 | 90C2 1-0 | 90C2 1-1 |
|---|---|---|---|
| 90C2 0-2 | 90C2 0-3 | 90C2 1-2 | 90C2 1-3 |

$X0 = 90C2l$

$Xn = 90C2n$

32 words = 32 pixels

32 bits or 16 pixels
(bit scale is compressed
into pixels to avoid
anamorphic scaling
of the illustration)

FIG. 25

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | ULTRAMICROSCOPY (NETHERLANDS), ULTRAMICROSCOPY, OCT. 1991, NETHERLANDS, 38, 1, 75 - 83 ISSN 0304-3991 van Heel M 'A fast algorithm for transposing large multidimensional image data sets' * page 76, right column, line 7 - line 29; figure 1 * | 1-6 | G06F15/62 |
| Y | US-A-4 168 488 (EVANS PETER J) 18 September 1979 * column 1, line 39 - line 59 * * abstract; claim 1; figures 2,3 * | 1-6 | |
| A | INTERNATIONAL SPECIALIST SEMINAR ON THE DESIGN AND APPLICATION OF PARALLEL DIGITAL PROCESSORS (CONF. PUBL. NO.298), LISBON, PORTUGAL, 11-15 APRIL 1988, 74 - 80 ISBN 0-85296-366-1 Danielsson E et al 'PICAP 3. A coarse-grained linear SIMD-array' * page 77, left column, line 31 - right column, line 14 * | 1-6 | |
| A | PROCEEDINGS. TWENTY-SIXTH ANNUAL ALLERTON CONFERENCE ON COMMUNICATION, CONTROL, AND COMPUTING, MONTICELLO, IL, USA, 28-30 SEPT. 1988, 1015 - 1024 VOL.2 Chakrabarti C et al 'A family of optimal architectures for multidimensional transforms' * page 1020, line 10 - line 12; figures 1,4 * | 1-6 | |
| A | EP-A-0 433 645 (XEROX CORP ) 26 June 1991 | | |

TECHNICAL FIELDS SEARCHED (Int.Cl.5)

G06F
G09G

The present search report has been drawn up for all claims

| Place of search | Date of completion of the search | Examiner |
|---|---|---|
| THE HAGUE | 11 May 1994 | Pierfederici, A |